(19) Europäisches Patentamt
European Patent Office
Office européen des brevets

(11) EP 4 298 891 A2

(12) EUROPEAN PATENT APPLICATION

(43) Date of publication:
03.01.2024 Bulletin 2024/01

(21) Application number: 23182599.3

(22) Date of filing: 30.06.2023

(51) International Patent Classification (IPC):
A01D 75/28 (2006.01)    A01D 34/00 (2006.01)

(52) Cooperative Patent Classification (CPC):
A01D 75/28; A01D 34/006

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.06.2022  IT 202200013909

(71) Applicant: Stiga S.p.A. in breve anche St. S.p.A.
31033 Castelfranco Veneto (TV) (IT)

(72) Inventors:
• BISCARO, Demis
  31050 Ponzano Veneto (TV) (IT)
• MOCELLIN, Enrico
  31020 San Zenone degli Ezzelini (TV) (IT)
• BENETTI, Enrico
  31033 CASTELFRANCO VENETO (TV) (IT)
• FRANCO, Luca
  31050 Cavasagra di Vedelago (TV) (IT)

(74) Representative: PGA S.p.A.
Via Mascheroni, 31
20145 Milano (IT)

(54) SAFETY SYSTEM FOR A LAND MAINTENANCE DEVICE

(57) The invention relates to a mobile device (2) for the maintenance of land, comprising a balance detector (90) configured to generate a signal representative of a tilt of the mobile device (2) with respect to a reference plane (RP) substantially orthogonal to the vertical direction (G) defined by the acceleration of gravity. A control unit is operatively connected to the balance detector (90) and configured to execute a safety procedure. The safety procedure comprises at least the steps of receiving the signal representative of the tilt of the mobile device (2), determining a tilt value of the mobile device (2) with respect to the reference plane (RP) and comparing the tilt value with the at least one threshold tilt value.

FIG. 2

EP 4 298 891 A2

## Description

FIELD OF THE INVENTION

The present invention relates to a mobile device aimed at carrying out land maintenance operations within a working area, for example mowing grass, or activities in the agricultural field. The present invention relates in particular to a safety system adapted to prevent the overturning of the mobile device during an operating condition thereof.

STATE OF THE ART

It is known in the field of gardening and land maintenance to use mobile devices, such as lawnmower devices, lawnmower tractors, and tractors used in the agricultural field, having one or more tools adapted to carry out land maintenance operations. The maintenance operations can comprise cutting turfgrasses, soil aeration, soil ploughing, soil tillage and the like.

The mobile devices belonging to the above type can be used on rough terrain, for example on steep slopes, or on inclined platforms in order to complete the necessary maintenance operations. However, a tilt of the mobile device beyond a certain threshold can cause its overturning, jeopardizing the safety of the driver and causing damage to the mobile device itself.

Systems are known in the art which provide the driver with information about the current tilt of the mobile device, for example the roll and/or pitch tilt of the mobile device. The driver can thus acquire such information and execute manoeuvres designed to re-establish a safe balance of the device. However, the Applicant points out that the current systems can be further improved in order to increase driver safety and reduce the risk of accidents.

EP3545749A1 discloses a lawnmower tractor with collection bag applied to the vehicle body and movable between a horizontal position for storing cut grass and an inclined position for unloading the cut grass. The lawnmower tractor comprises a drive unit of the collection bag with respect to the vehicle body and a tilt sensor capable of detecting the tilt angle of the lawnmower tractor with respect to a horizontal plane. In order to prevent the overturning of the lawnmower when unloading the cut grass from the collection bag, the drive unit is controlled as a function of the tilt sensor. US2021/0029883A1 discloses a lawnmower tractor with a control unit capable of separately controlling the advancement motor of the lawnmower tractor and the power take-off to which the cutting blades are coupled. The lawnmower tractor further comprises an inclinometer which provides the control unit with information indicative of the tilt angle of the lawnmower tractor frame. When the tilt angle exceeds a first value, the control unit turns off the power take-off, but the advancement motor is kept on. When the tilt angle exceeds a second value, the control unit also switches off the advancement motor.

US2021/0022293A1 discloses a lawnmower tractor in which the advancement motor is controlled according to a sliding ratio (indicative of the extent of sliding while the lawnmower tractor is running) and according to a friction coefficient (indicative of the friction of the ground on which the lawnmower tractor travels). The lawnmower tractor further comprises a tilt angle detector, so as to allow possible corrections of the friction coefficient.

US7,762,633 discloses a motor vehicle capable of developing a variable braking force as a function of the slope of the slope determined by means of an inclinometer.

EP1488296A1 discloses a self-driving land maintenance apparatus, the control means of which are configured to modify the operation of the apparatus as a function of environmental conditions, such as in particular rain, soil moisture and slope of the land, detected by sensor means installed on board the apparatus.

GB2325060A discloses a vehicle having a control unit of the motor and braking system capable of taking into account the signal detected by an inclinometer installed on board the vehicle.

CN206602838U discloses an automatic pruning apparatus provided with a tilt sensor for detecting the angle between the shell of the device and the horizontal plane while running. If an overturning of the equipment is detected by the tilt sensor, the equipment control unit proceeds to stop the advancement system and the cutting system.

US8,352,116B2 discloses a lawnmower tractor with a tilt detection apparatus comprising an accelerometer which generates a first signal representative of the tilt angle defined between a first detection axis and a horizontal reference plane and a second signal representative of the tilt angle defined between a second detection axis and the horizontal reference plane. An actual angle is calculated based on the first tilt signal and the second tilt signal. The actual angle is compared with a first predetermined value. If the actual angle exceeds the first predetermined value, a warning light is turned on to warn the operator that a potentially unsafe condition is approaching, and the actual angle is then compared with a second predetermined value. If the actual angle also exceeds the second predetermined value, the power supplied to the cutting organ is reduced or a safety cage is operated. US5,204,814 discloses a self-driving lawnmower device comprising a tilt sensor which determines the tilt of the shell of the lawnmower device with respect to a horizontal plane, the operation of the lawnmower device being able to be stopped following comparison of the detected tilt values with stored values.

JP58-54509U discloses an agricultural machine comprising a pair of sensors arranged on the sides of the machine and a sliding body which comes into contact with one of the sensors when the machine is in an overturning condition, upon detection of the overturning condition, it being possible to provide the activation of an alarm or stopping traction.

US2021/0127568A1 discloses a lawnmower apparatus comprising a photoelectric sensor which detects the tilt angle between the cutting tool of the lawnmower apparatus and a horizontal plane. When the tilt angle is greater than a preset value, the control unit of the lawnmower removes power supply to the electric motor connected to the cutting tool.

US9,459,097B2 discloses a lawnmower tractor provided with a tilt detection device comprising an accelerometer and a gyroscope, so as to detect the tilt of the lawnmower tractor along two distinct axes and then calculate the actual tilt angle. The control mode of the lawnmower tractor includes the generation of an alarm if the actual tilt angle exceeds a first limit value equal to 15° and the deactivation of the relay by means of which the power take-off is powered if the actual tilt angle also exceeds a second limit equal to 45°.

US6,983,583B2 discloses a lawnmower tractor of the type with two independently-controlled drive wheels. The lawnmower tractor comprises a dual-axis digital inclinometer for detecting the tilt angle of the lawnmower tractor with respect to a horizontal plane. The control of the lawnmower tractor involves the comparison of the tilt angle with a control angle of 10° and with a limit angle of 20°. The execution of predetermined actions is envisaged both when the control angle is exceeded and when the limit angle is exceeded.

## OBJECTIVES OF THE INVENTION

Therefore, the object of the present invention is to solve at least one of the drawbacks and/or limitations of the previous technical solutions.

A further objective is to provide a mobile device which reduces the overturning risk of the mobile device.

A further objective is to provide a mobile device which is capable of noting a dangerous condition and at least partially remedying it.

A further objective is to provide a mobile device which allows to face steep terrain by putting in place safety measures to prevent overturning.

A further objective is to provide a mobile device which is easy and economic to make.

## ASPECTS OF THE INVENTION

The objectives set forth above are effectively achieved by means of the mobile device of the present invention, in particular as defined by the features of the appended claims and/or the following aspects (the claims and aspects of the present invention can be considered individually or also in combination with each other).

An independent aspect of the invention relates to a mobile device (2) for the maintenance of land (1), in particular a lawnmower tractor, extending longitudinally along a longitudinal axis (X) and transversely along a transverse axis (Y), said mobile device (2) comprising:

- a balance detector (90) configured to generate a signal representative of a tilt of the mobile device with respect to a reference plane (RP) substantially orthogonal to the vertical direction (G) defined by the acceleration of gravity; and
- a control unit operatively connected to the balance detector (90) and configured to execute a safety procedure (200),

in which said safety procedure (200) comprises at least the following steps:

- receiving said signal representative of the tilt of the mobile device (2);
- determining a tilt value of the mobile device (2) with respect to the reference plane (RP);
- comparing said tilt value with at least one respective threshold tilt value.

A further independent aspect of the invention relates to a safety process for a mobile device (2) for the maintenance of land (1), said mobile device (2) comprising:

- a balance detector (90) configured to generate a signal representative of a tilt of the mobile device (2) with respect to a reference plane (RP) substantially orthogonal to the vertical direction (G) defined by the acceleration of gravity;

and in which said safety procedure includes executing a safety procedure (200) comprising at least the following steps:

- receiving said signal representative of the tilt of the mobile device (2);
- determining a tilt value of the mobile device with respect to the reference plane (RP);
- comparing said tilt value with at least one respective threshold tilt value.

In a 2nd aspect in accordance with any one of the preceding aspects, the mobile device (2) extends, in particular in height, along a further axis (Z), said further axis being substantially orthogonal to the longitudinal axis (X) and being substantially orthogonal to the transverse axis (Y), in particular in which the longitudinal axis (X), the transverse axis (Y) and the further vertical axis (Z) define a reference system integral with the mobile device (2).

In a 3rd aspect in accordance with any one of the preceding aspects, said balance detector (90) comprises at least one among an accelerometer, in particular a biaxial or triaxial accelerometer, and a gyroscope.

In a 4th aspect in accordance with any one of the preceding aspects, said balance detector (90) comprises an accelerometer, in particular biaxial or triaxial.

In a 5th aspect in accordance with any one of the preceding aspects, said balance detector (90) comprises a gyroscope.

In a 6th aspect in accordance with any one of the preceding aspects, said balance detector (90) comprises a biaxial or triaxial accelerometer and a gyroscope, the control unit being configured to determine the tilt of the mobile device, in particular pitch tilt and roll tilt, based on signals generated by the accelerometer and the gyroscope, in particular based on the combination of signals detected by the accelerometer and by the gyroscope.

In a 7th aspect in accordance with any one of the preceding aspects, said balance detector (90) is configured to determine a pitch tilt of the mobile device around the transverse axis (Y).

In an 8th aspect in accordance with any one of the preceding aspects, said balance detector (90) is configured to determine a roll tilt of the mobile device around the longitudinal axis (X).

In a 9th aspect in accordance with any one of the preceding aspects, said mobile device (2) comprises movement means (6) for determining the movement of the mobile device (2) on a land, said control unit (100) being further operatively connected to the movement means (6).

In a 10th aspect in accordance with the preceding aspect, said safety procedure (200) comprises the step of varying at least one control parameter of the movement means (6) as a function of the comparison between said tilt value and said at least one respective threshold tilt value.

In an 11th aspect in accordance with any one of the preceding aspects, said control parameter of the movement means comprises at least one among:

- a maximum speed imposed on the mobile device;
- a maximum acceleration imposed on the mobile device;
- a maximum acceleration variation imposed on the mobile device;
- a maximum direction variation imposed on the mobile device.

In a 12th aspect in accordance with any one of the preceding aspects, said control parameter of the movement means comprises a maximum speed imposed on the mobile device.

In a 13th aspect in accordance with any one of the preceding aspects, said control parameter of the movement means comprises a maximum acceleration imposed on the mobile device.

In a 14th aspect in accordance with any one of the preceding aspects, said control parameter of the movement means comprises a maximum speed imposed on the mobile device, and a maximum acceleration imposed on the mobile device.

In a 15th aspect in accordance with any one of the preceding aspects, said control parameter of the movement means comprises a maximum direction variation imposed on the mobile device.

In a 16th aspect in accordance with any one of the preceding aspects, said control parameter of the movement means comprises a maximum speed imposed on the mobile device, a maximum acceleration imposed on the mobile device, and a maximum direction variation imposed on the mobile device.

In a 17th aspect in accordance with any one of aspects 9 to 16, the control unit is configured to adjust the movement means to vary a maximum speed of the mobile device and/or a maximum acceleration of the mobile device.

In an 18th aspect in accordance with any one of the preceding aspects, in said safety procedure, said step of varying at least one control parameter of the movement means comprises limiting the maximum speed and/or the maximum acceleration of the mobile device, in advancement and/or in reverse, as a function of said pitch tilt and said roll tilt detected, in particular contextually, by the tilt detector,

In a 19th aspect in accordance with any one of the preceding aspects, in said safety procedure, said step of varying at least one control parameter of the movement means comprises reducing the maximum speed and/or the maximum acceleration of the mobile device, in advancement and/or in reverse, with the increase of at least one among the pitch tilt and the roll tilt of the mobile device (2). In a 20th aspect in accordance with any one of the preceding aspects, the control unit is configured to control the movement means to determine the movement of the mobile device (2) selectively in:

- a fast mode, in which the movement means are allowed to move the mobile device up to a maximum speed, and
- at least one slow mode in which the movement means are allowed to move the mobile device up to a reduced speed, said reduced speed being comprised between 20% and 80% of said maximum speed of the mobile device, optionally between 30% and 60%, in particular said reduced speed being comprised between 2 km/h and 6 km/h, in particular between 3 km/h and 5 km/h.

In a 21st aspect in accordance with the preceding aspect, in said safety procedure, said step of varying at least one control parameter of the movement means comprises:

- if the tilt value detected by the balance detector (90) exceeds the respective threshold tilt value, inhibiting the fast mode and allowing the slow mode;
- if the tilt value detected by the balance detector (90) is within the respective threshold tilt value, allowing both slow mode and fast mode.

In a 22nd aspect in accordance with any one of the preceding aspects, in said safety procedure, said step of varying at least one control parameter of the movement means comprises:

- if the pitch tilt of the mobile device (2) is:

  ◦ greater than a threshold pitch tilt, inhibiting fast mode and allowing slow mode;
  ◦ less than said threshold pitch tilt, allowing both slow mode and fast mode.

In a 23rd aspect in accordance with any one of the preceding aspects, in said safety procedure, said step of varying at least one control parameter of the movement means comprises:

- if the roll tilt of the mobile device (2) is:

  ◦ greater than a threshold roll tilt, inhibiting fast mode and allowing slow mode;
  ◦ less than said threshold roll tilt, allowing both fast mode and slow mode.

In a 24th aspect in accordance with any one of aspects 20 to 23, the maximum speed of the mobile device comprises:

- a maximum advancement speed comprised between 10 km/h and 25 km/h, in particular between 10 km/h and 15 km/h, in particular substantially equal to 12 km/h, and optionally
- a maximum reverse speed comprised between 2 km/h and 5 km/h, in particular between 3 km/h and 4 km/h, in particular substantially equal to 3 km/h.

In a 25th aspect in accordance with any one of aspects 20 to 24, the reduced speed includes speeds between 20% and 50% of said maximum speed of the mobile device, optionally between 25% and 35%, in particular substantially equal to 30% of said maximum speed of the mobile device.

In a 26th aspect in accordance with the preceding aspect, the control unit is configured to control the movement means to determine the movement of the mobile device (2) in a standard mode, distinct from said fast mode and said slow mode, in said standard mode the movement means being allowed to move the mobile device up to a nominal speed, said nominal speed being greater than said reduced speed and less than said maximum speed.

In a 27th aspect in accordance with the preceding aspect, said nominal speed including speed between 50% and 80% of said maximum speed of the mobile device, optionally between 55% and 65%, in particular substantially equal to 60% of said maximum speed of the mobile device.

In a 28th aspect in accordance with any one of the preceding aspects, said threshold tilt value comprises:

- a first threshold tilt value, and
- a second distinct threshold tilt value greater than the first threshold tilt value.

In a 29th aspect in accordance with any one of the preceding aspects, in said safety procedure, said step of varying at least one control parameter of the movement means comprises:

- if the tilt value detected by the balance detector (90) is:

  ◦ greater than the second threshold tilt value, inhibiting fast mode and standard mode and allowing slow mode;
  ◦ greater than the first threshold tilt value and less than the second threshold tilt value, inhibiting fast mode and allowing both slow mode and standard mode;
  ◦ less than the first threshold tilt value, allowing fast mode, standard mode and slow mode.

In a 30th aspect in accordance with aspect 28 or aspect 29, the first threshold tilt value includes tilts of the mobile device (2) comprised between 0° and 6°, in particular between 0° and 5°.
In a 31 st aspect in accordance with any one of aspects 28 to 30, the second threshold tilt value includes tilts of the mobile device (2) comprised between 5° and 12°, in particular between 5° and 10°.
In a 32nd aspect in accordance with any one of the preceding aspects, the threshold pitch tilt comprises:

- a first threshold pitch tilt value, and
- a second distinct threshold pitch tilt value greater than the second threshold pitch tilt value.

In a 33rd aspect in accordance with the preceding aspect, in said safety procedure, said step of varying at least one control parameter of the movement means comprises:

- if the pitch tilt value of the mobile device (2) is:

  ◦ greater than the second threshold pitch tilt value, inhibiting fast mode and standard mode and allowing slow mode;
  ◦ greater than the first threshold pitch tilt value and less than the second threshold pitch tilt value, inhibiting fast mode and allowing both slow mode and standard mode;
  ◦ less than the first threshold pitch tilt value, allowing fast mode, standard mode and slow, In a 34th aspect in accordance with any one of the preceding aspects, the threshold roll tilt comprises:

- a first threshold roll tilt value, and

- a second distinct threshold roll tilt value larger than the first threshold roll tilt value.

In a 35th aspect in accordance with the preceding aspect, in said safety procedure, said step of varying at least one control parameter of the movement means comprises:

- if the roll tilt of the mobile device (2) is:

  ∘ greater than the second threshold roll tilt value, inhibiting fast mode and standard mode and allowing slow mode;
  ∘ greater than the first threshold roll tilt value and less than the second threshold roll tilt value, inhibiting fast mode and allowing both slow mode and standard mode;
  ∘ less than the first threshold roll tilt value, allowing fast mode, standard mode and slow,

In a 36th aspect in accordance with any one of the preceding aspects, the safety procedure comprises limiting the maximum speed of the mobile device (2) as a function of a variation over time of the roll tilt and/or a variation over time of the pitch tilt of the mobile device (2), in particular said variation over time being a variation in infinitesimal time, for example less than 0.5s, in particular less than 0.1s.

In a 37th aspect in accordance with the preceding aspect, the safety procedure comprises reducing the maximum speed of the mobile device (2) with the increase in variation over time of the roll tilt and/or variation over time of the pitch tilt.

In a 38th aspect in accordance with any one of the preceding aspects, the safety procedure comprises limiting the maximum speed of the mobile device (2), for example inhibiting fast mode or standard mode, as a function of the roll tilt and/or the pitch tilt according to a continuous function.

In a 39th aspect in accordance with any one of the preceding aspects, the tilt value of the mobile device (2) calculated by the control unit comprises a resulting tilt defined by the combination between the roll tilt and the pitch tilt of the mobile device.

In a 40th aspect in accordance with the preceding aspect, said resulting tilt comprises at least one combination among the roll tilt and the pitch tilt of the mobile device, in particular there being a mathematical relationship between said resulting tilt and a sum at least between the square of the roll tilt and the square of the pitch tilt of the mobile device.

In an aspect 40bis in accordance with aspect 39 or aspect 40, said resulting tilt defines a vertical angle (δ) between the direction of the acceleration of gravity (G) and the further axis (Z) of the mobile device (2).

In an aspect 40ter in accordance with the above aspect, said vertical angle (δ) is calculated according to the following formula:

$$\delta = arccos \frac{a_z}{\sqrt{a_x^2 + a_y^2 + a_z^2}}$$

where:

- $a_x$ is the acceleration value detected by the accelerometer along the direction of the longitudinal axis (X);
- $a_y$ is the acceleration value detected by the accelerometer along the direction of the transverse axis (Y);
- $a_z$ is the acceleration value detected by the accelerometer along the direction of the further axis (Z) of the mobile device (2).

In a 41st aspect in accordance with any one of the preceding aspects, the balance detector (90) comprises an accelerometer configured to detect at least one acceleration of the mobile device, in particular at least one longitudinal acceleration along the longitudinal axis (X) and one transverse acceleration along the transverse axis (Y) and optionally one vertical acceleration substantially orthogonal to the plane defined by the longitudinal axis (X) and the transverse axis (Y).

In a 42nd aspect in accordance with the preceding aspect, the control unit is configured to calculate the tilt value of the mobile device at least based on said detected acceleration.

In a 43rd aspect in accordance with aspect 41 or aspect 42, the control unit is configured to calculate the roll tilt value of the mobile device based on said longitudinal and transverse acceleration and optionally based on said vertical acceleration.

In a 44th aspect in accordance with any one of aspects 41 to 43, the control unit is configured to calculate the pitch tilt value of the mobile device based on said longitudinal and transverse acceleration and optionally based on said vertical acceleration.

In a 45th aspect in accordance with any one of the preceding aspects, said control unit is further configured to execute a validation procedure adapted to verify a reliability of the tilt values detected by the balance detector (90) and to subordinate the execution of said safety procedure to the outcome of said validation procedure.

In an aspect 45bis in accordance with the preceding aspect, the validation procedure (300) envisages validating the data as a function of the acceleration values detected or as a function of the angular velocity of the mobile device (2) around the further axis (Z) of the mobile device (2).

In an aspect 45ter in accordance with aspect 45, the validation procedure (300) envisages validating the data as a function of both the acceleration values detected and as a function of the angular velocity of the mobile device (2) around the further axis (Z) of the mobile device (2).

In a 46th aspect in accordance with any one of aspects 45, 45bis 45ter, said validation procedure comprises at least the steps of:

- detecting an acceleration of the mobile device;
- comparing said acceleration of the mobile device with a threshold acceleration;
- if the acceleration of the mobile device exceeds said threshold acceleration, discarding said detected acceleration of the mobile device,
- if the acceleration of the mobile device is comprised in said threshold acceleration, calculating the tilt of the mobile device as a function of said detected acceleration.

In a 47th aspect in accordance with the preceding aspect, said threshold acceleration comprises acceleration values between 1g and 1.5g, in particular between 1g and 1.3g, more in particular between 1.1g and 1.3g, in greater detail said threshold acceleration being substantially equal to 1g or 1.1g.

In a 48th aspect in accordance with aspect 46 or aspect 47, said threshold acceleration comprises acceleration values along the longitudinal axis (X) between 1g and 1.5g, in particular between 1g and 1.3g, more in particular between 1.1g and 1.3g, in greater detail said threshold acceleration being substantially equal to 1g or 1.1g.

In a 49th aspect in accordance with any one of aspects 46 to 48, said threshold acceleration comprises acceleration values along the transverse axis (Y) between 1g and 1.5g, in particular between 1g and 1.3g, more in particular between 1.1g and 1.3g, in greater detail said threshold acceleration being substantially equal to 1g or 1.1g.

In an aspect 49bis in accordance with any one of aspects 45 to 49, said validation procedure comprises at least the steps of:

- detecting an angular velocity of the mobile device (2) around the further axis (Z) of the mobile device (2);
- comparing said angular velocity of the mobile device with a threshold angular velocity;
- if the angular velocity of the mobile device exceeds said threshold angular velocity, denying the reliability of the tilt values detected by the balance detector (90),
- if the angular velocity of the mobile device exceeds said threshold angular velocity, approving the reliability of the tilt values detected by the balance detector (90).

In an aspect 49bis in accordance with the preceding aspect, said threshold angular velocity comprises a range of values.

In a 50th aspect in accordance with any one of the preceding aspects, the balance detector (90) is configured to detect an acceleration which is vertical and/or substantially parallel to the further axis (Z) of the mobile device (2) and/or substantially orthogonal to a support plane (SP) and/or to the plane passing through the longitudinal axis (X) and the transverse axis (Y).

In an aspect 50bis in accordance with the preceding aspect, the support plane (SP) is parallel to the plane passing through the longitudinal axis (X) and the transverse axis (Y).

In an aspect 50ter in accordance with the preceding aspect, the support plane (SP) is integral with the mobile device (2), in particular the support plane (SP) is integral with the reference system defined by the longitudinal axis (X), by the transverse axis (Y) and by the further axis (Z) of the mobile device (2). In a 51st aspect in accordance with any one of aspects 45 to 50ter, the validation procedure further comprises the step of, if a vertical acceleration detected by the balance detector (90) is comprised between a predefined minimum vertical acceleration threshold and a predefined maximum vertical acceleration threshold, validating the signals detected by the balance detector (90) to determine the tilt of the mobile device.

In a 52nd aspect in accordance with any one of the preceding aspects from 45, the validation procedure further comprises the step of, if a vertical acceleration detected by the balance detector (90) is less than said minimum vertical acceleration threshold and greater than said maximum vertical acceleration threshold, discarding the respective signals detected by the balance detector (90).

In a 53rd aspect in accordance with any one of the preceding aspects, said control unit is configured to execute a calibration procedure of the balance detector (90), said calibration procedure comprising the steps of:

- detecting the signals generated by the balance detector (90) when the mobile device is in a flat position, in said flat position the mobile device lying on a support plane (SP) substantially parallel to the reference plane (RP);
- as a function of said signals, determining at least one reference tilt value when the mobile device is in said flat position;
- calculating an actual tilt value of the mobile device with respect to the reference plane (RP) starting from said at least reference tilt value,

optionally said reference tilt value comprising a mounting tilt of the balance detector (90).

In an aspect 53bis in accordance with the preceding aspect, said reference tilt value comprises a reference pitch tilt value $\alpha_{offset}$ representative of a tilt of the balance detector (90) with respect to the longitudinal axis (X) of the mobile device (2).

In an aspect 53ter according to aspect 53 or aspect 53bis, said reference tilt value comprises a reference roll tilt value $\beta_{offset}$ representative of a tilt of the balance detector (90) with respect to the transverse axis (Y) of the mobile device (2).

In an aspect 53quater in accordance with any one of aspects 53, 53bis and 53ter, the accelerometer of the balance detector is configured to generate a signal representative of an acceleration along a first axis, and along a second axis orthogonal to the first axis, in which said first axis is inclined with respect to the longitudinal axis (X) of said reference pitch tilt value $\alpha_{offset}$ and in which said second axis is inclined with respect to the transverse axis (Y) of said reference roll tilt value $\beta_{offset}$.

In an aspect 53quinquies in accordance with any one of aspects 53 to 53quater, the step of calculating the actual tilt value of the mobile device comprises subtracting the reference tilt value from the detected tilt value of the mobile device (2).

In an aspect 53sexies in accordance with aspect 40ter and any one of aspects 53 to 53quinquies, the control unit is configured to calculate acceleration values $a_x$, $a_y$, $a_z$ as a function of:

- said acceleration signals emitted by the accelerometer of the balance detector (90) and of
- a rotation matrix in space comprising the at least one reference tilt value.

In a 54th aspect in accordance with any one of aspects 53 to 53sexies, said reference tilt value is variable as a function of a variation of the balance of the mobile device, said variation of the balance of the mobile device comprising at least one among:

- variation in height of a cutting deck of the mobile device, said cutting deck housing at least one tool configured to execute maintenance operations on the land;
- variation in height of a front wheel axle of the mobile device and/or of a rear wheel axle of the mobile device;
- replacement of one or more wheels of the mobile device;
- variation of the diameter of one or more wheels of the mobile device.

In a 55th aspect in accordance with any one of aspects 53 to 54, said control unit is configured to execute the calibration procedure as a result of a variation in balance of the mobile device (2), for example in which said control unit is configured to execute the calibration procedure automatically as a result of at least one among:

- variation in height of a cutting deck of the mobile device (2), said cutting deck housing at least one tool configured to execute maintenance operations on the land;
- a variation in height of the front wheel axle and/or the rear wheel axle of the mobile device (2);
- replacement of one or more wheels of the mobile device (2);
- a variation of the diameter of one or more wheels of the mobile device.

In a 56th aspect in accordance with any one of the preceding aspects, said control unit is configured to define said threshold tilt values, in particular the threshold pitch tilt value and the threshold roll tilt value, as a function of a variable balance parameter during an operating condition of the mobile device (2).

In a 57th aspect in accordance with the preceding aspect, said variable balance parameter comprises at least one among:

- a weight of a collection bag of the mobile device adapted to collected mown grass,
- a vertical load acting on one or more wheels of the mobile device, for example a vertical load acting on the front wheel axle and/or on the rear wheel axle;
- a mass or weight of the mobile device;
- a mass or weight directly proportional to the mass of the mobile device.

In a 58th aspect in accordance with any one of the preceding aspects, said mobile device comprises at least one warning system configured to emit a warning signal.

In a 59th aspect in accordance with the preceding aspect, said safety procedure comprises the step of activating said warning system when the detected tilt value of the mobile device exceeds the respective threshold tilt value.

In a 60th aspect in accordance with aspect 58 or aspect 59, said warning system comprises at least one among:

- a sound emitter configured to emit a sound signal;
- a light emitter, for example arranged on a control panel of the mobile device (2), configured to emit a light signal.

In a 61st aspect in accordance with any one of the preceding aspects, the mobile device comprises an electric motor or internal combustion engine connected to the driving movement means 6 of the lawnmower tractor 2 to determine the movement of the mobile device.

In a 62nd aspect in accordance with the preceding aspect, the control unit (100) is configured to control said motor of the movement means to vary the control parameter, for example to vary the maximum speed of the mobile device and/or to vary a maximum acceleration of the mobile device.

In a 63rd aspect in accordance with any one of the preceding aspects, the mobile device comprises a speed detector configured to generate a signal representative of a speed of the mobile device.

In a 64th aspect in accordance with the preceding aspect, the speed detector comprises at least one among a satellite geolocator, a speed transducer and a position transducer, the control unit being configured to determine a current speed of the mobile device based on signals generated by said satellite geolocator and/or by said speed transducer and/or by said position transducer.

In an aspect 64bis in accordance with aspect 63 or aspect 64, the speed detector is configured to generate the signal representative of a speed of the mobile device based on a current and/or a supply voltage of the electric motor of the movement means (6).

In a 65th aspect in accordance with any one of aspects 63 to 65, the control unit is configured for:

- receiving said signal representative of the speed of the mobile device in input;
- calculating, in particular during the safety procedure, a speed value of the mobile device as a function of said speed signal;
- limiting the maximum speed of the mobile device by acting on said movement means as a function of the safety procedure.

In a 66th aspect in accordance with any one of the preceding aspects, the mobile device comprises at least one tool (4) configured to execute maintenance operations on said land.

In a 67th aspect in accordance with the preceding aspect, the mobile device comprises at least one cutting deck (20) carrying said tool (4).

In a 68th aspect in accordance with the preceding aspect, said cutting deck is movable in height to vary a cutting height.

In a 69th aspect in accordance with any one of aspects 66 to 68, said mobile device comprises at least one drive motor operatively connected to said tool (4) and configured to move said tool (4) to execute the maintenance operations.

In a 70th aspect according to any one of the preceding aspects, said device (2) is a manually-driven lawnmower tractor, in particular comprising a driver's seat for an operator.

In a 71st aspect according to any one of the preceding aspects, said movement means (6) of the device (2) define a support plane (SP), in particular in which the contact points between the movement means and the ground define the support plane (SP).

In a 72nd aspect according to any one of the preceding aspects, the device (2) comprises a steering organ (9) configured to direct the device (2).

In a 73rd aspect according to the preceding aspect, said steering organ (9) comprises a joystick operatively connected to the movement means (6), for example in which said joystick being configured to steer one or more wheels of the movement means (6) or to control the rotation speed of at least two wheels of the movement means.

In a 74th aspect according to aspect 72 or aspect 73, said steering organ (9) comprises an electronic steering organ (9), for example said joystick, configured to determine the steering of the mobile device by means of actuation of one or more electric motors or electric actuators, and in which said control unit (100) is configured to control said electronic steering organ (9) to control a direction of the mobile device during an operating condition of the mobile device.

In a 75th aspect according to any of the preceding aspects, the device (2) is electrically powered and in particular powered by one or more on-board batteries.

In a 76th aspect according to any one of the preceding aspects, said pitch tilt defines a pitch angle α calculated by means of the following formula:

$$\alpha = arctan\left(\frac{a_x}{\sqrt{a_x^2 + a_y^2 + a_z^2}}\right) - \alpha_{offset}$$

where:

- a, is an acceleration along the longitudinal axis (X) of the mobile device (2) detected by the accelerometer;
- $a_y$ is an acceleration along the transverse axis (Y) of the mobile device (2) detected by the accelerometer
- $a_z$ is an acceleration along the further axis (Z) of the mobile device (2) detected by the accelerometer;
- $\alpha_{offset}$ is a pitch angle representative of the reference pitch tilt value.

In a 77th aspect according to any one of the preceding aspects, said roll tilt defines a pitch angle β calculated by means of the following formula:

$$\beta = arctan\left(\frac{-a_y}{a_z}\right) - \beta_{offset}$$

where:

- a, is an acceleration along the longitudinal axis (X) of the mobile device (2) detected by the accelerometer;
- $a_y$ is an acceleration along the transverse axis (Y) of the mobile device (2) detected by the accelerometer;
- $a_z$ is an acceleration along the further axis (Z) of the mobile device (2) detected by the accelerometer;
- $\beta_{offset}$ is a roll angle representative of the reference roll tilt value.

BRIEF DESCRIPTION OF THE DRAWINGS

Some embodiments of the invention will be described hereinafter with reference to the accompanying drawings, given merely for illustrative, non-limiting purposes in which:

- figure 1 is a side view of the mobile device in a flat position;
- figure 2 is a side view of the mobile device in an inclined position, in particular in which the mobile device has a pitch tilt a;
- figure 3 is a top view of the mobile device;

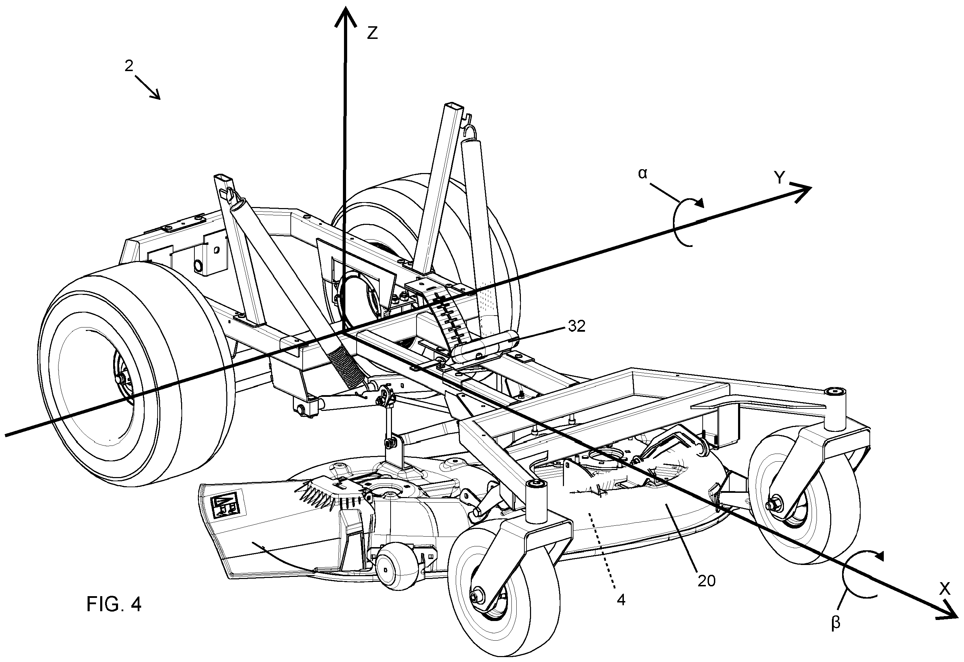

- figure 4 is a perspective view of the mobile device;
- figure 5 is a perspective view of an alternative embodiment of the mobile device;
- figure 5a is a detail view depicting the position, in an embodiment, of the control unit and the balance detector 90;

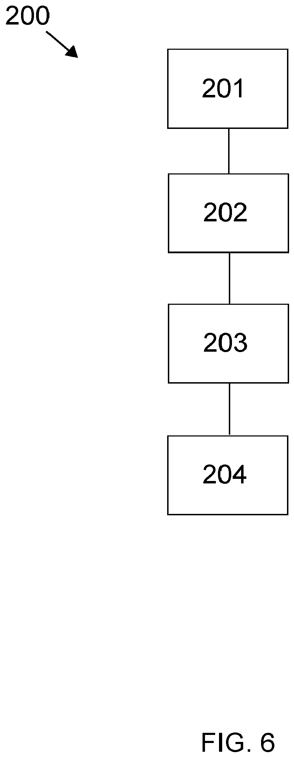

- figure 6 is a flowchart of the safety procedure;

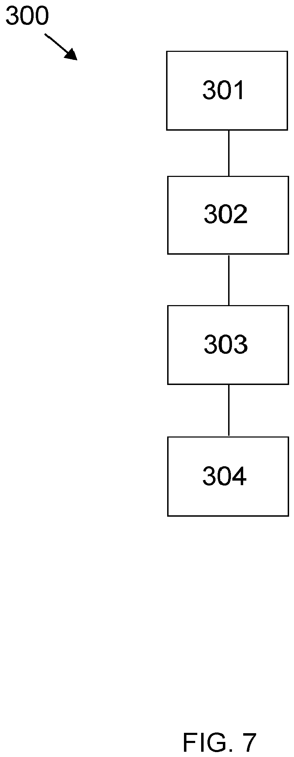

- figure 7 is a flowchart of the validation procedure.

It should be noted that in the present detailed description, corresponding parts illustrated in the various figures are indicated with the same numerical references. The figures could illustrate the object of the invention through non--scale depictions; therefore, the parts and components illustrated in the figures related to the object of the invention could exclusively relate to schematic depictions.

DETAILED DESCRIPTION

**MOBILE DEVICE 2**

The present disclosure relates to a mobile device 2, also called device 2, configured to move and execute maintenance operations on a land within a working area 1, such as turfgrass, a garden, or agricultural land, having an extension comprised between 10 and 20000 square meters, in particular between 500 and 10000 square meters: the maintenance operations can comprise, for example, cutting turfgrasses, soil aeration, soil tillage, sowing, and harvesting in a plantation or the like. In particular, the mobile device 2 can be, for example, a lawnmower as shown in the accompanying drawings.

The mobile device 2 can be a manually-driven device or a self-driving device. The mobile device 2 can be a tractor, for example a lawnmower tractor, comprising a driving station 5 for receiving the operator on board, i.e., a driver, the latter adapted to drive the tractor inside the working area 1. In particular, the driving station 5 comprises a seat 5a adapted to receive the operator.

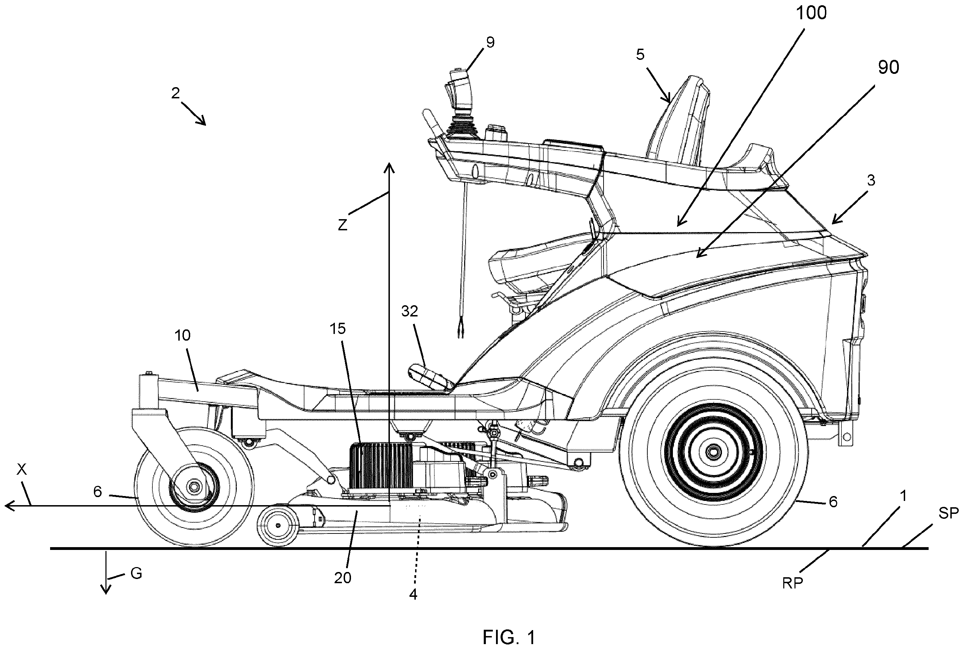

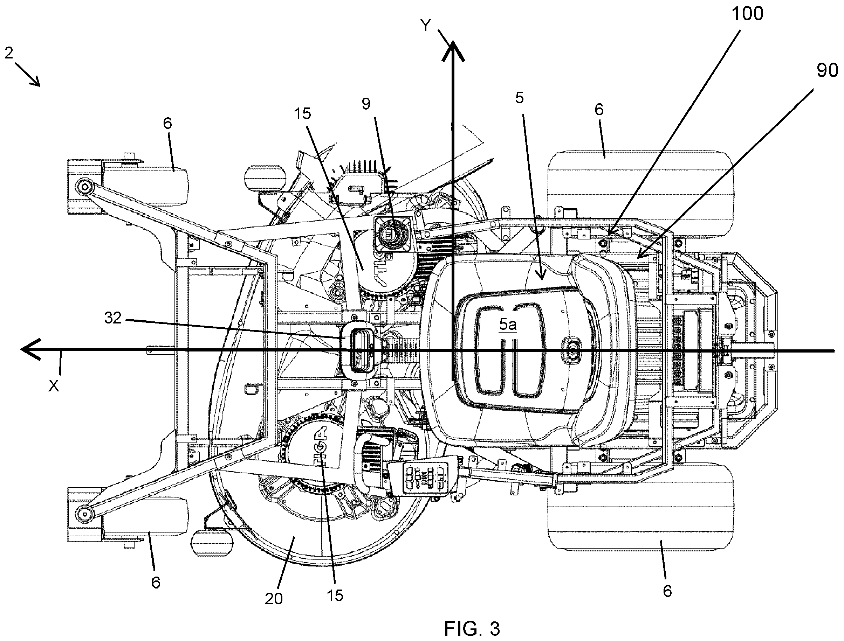

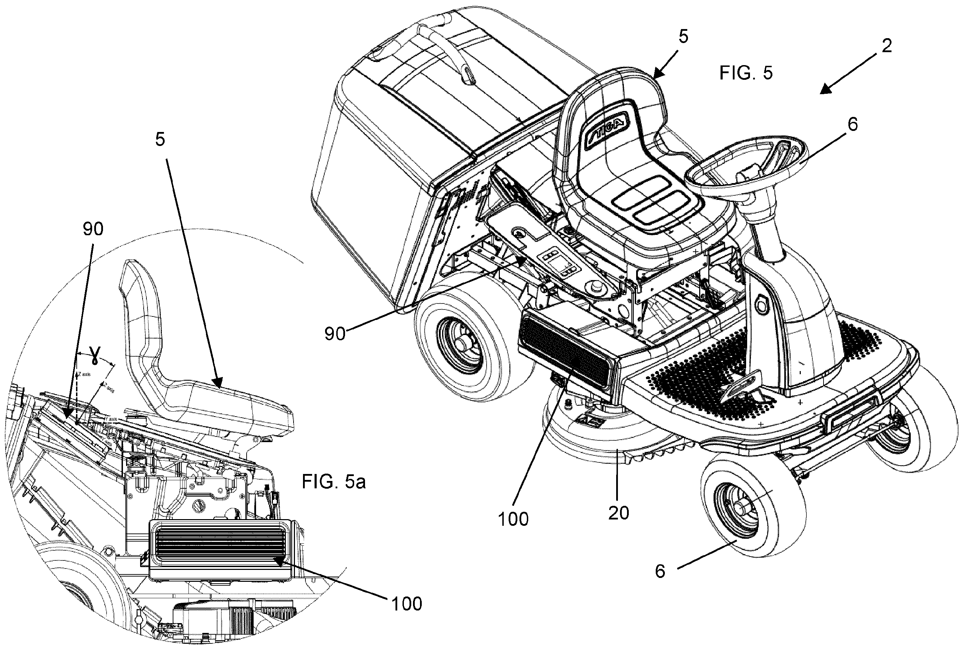

The lawnmower tractor further comprises at least one steering organ 9, for example a handlebar or a steering wheel, as shown in figure 5, or a joystick, as shown in figures 1-3, driven by the operator and configured to steer the tractor in a desired direction. Optionally the steering organ can comprise an electronic steering organ, in which the steering of the mobile device is electrically controlled by means of the actuation of one or more electric motors. The electronic steering organ 9 is also called a "Drive by Wire" system by the person skilled in the art, of the type as depicted in figures 1-3.

The lawnmower tractor 2 comprises driving movement means 6, for example one or more traction wheels, adapted to determine the advancement of the mobile device 2. An electric motor can be connected to the driving movement means 6 of the lawnmower tractor 2 to cause the movement: such a motor can have a nominal power comprised between 1.5 kW and 30 kW, in particular between 4 kW and 15 kW, in the case of a tractor with a driving station for an operator. The lawnmower tractor 2 can comprise a rechargeable on-board battery having a charging capacity comprised between 5 Wh and 40 Wh and configured to electrically power the electric motor of the driving movement means 6. The battery can be configured to deliver a voltage preferably comprised between 24 Volts and 48 Volts, or up to 72 Volts. In greater detail, the battery can be a rechargeable battery via a power outlet of a home network, for example a 110V, 200V, 230V, 380V or 400V power source and/or can be configured to deliver a current, during a standard use condition, comprised between 2 Amps and 300 Amps. Alternatively, the tractor can comprise an internal combustion engine operatively connected to the driving movement means 6 to determine the movement of the mobile device. The internal combustion engine can have a maximum power comprised between 3 kW and 200 kW.

A control unit 100 can be operatively connected to the movement means 6 and configured to control them to vary a maximum speed of the mobile device and/or a maximum acceleration of the mobile device. For example, the control unit can vary a voltage and/or a supply current of the electric motor of the movement means 6 so as to vary a maximum speed of the mobile device: in particular the control unit can be configured to limit a maximum electric power of the electric motor of the movement means.

The mobile device 2 can comprise a speed detector configured to generate a signal representative of the speed of the mobile device 2. The speed detector can for example comprise an encoder mounted on one or more wheels of the mobile device or mounted on the shaft of the motor of the movement means 6. Alternatively, or in addition, the mobile device 2 can comprise a satellite geolocation detector, for example a GPS detector, adapted to generate a geolocation signal over time. In such a case, the control unit can be configured to determine a speed of the mobile device 2 according to the geolocation signal over time. Alternatively, the control unit 100 can estimate a rotation speed of the electric motor and consequently determine the speed of the mobile device 2. According to a technical alternative, the speed of the mobile device 2 can be estimated from a signal generated by a speed transducer and/or by a position transducer on board the mobile device 2. According to a further technical alternative, the speed of the mobile device 2 can be derived from the current absorbed by the electric motor of the movement means 6 and/or from the supply voltage of the electric motor of the movement means 6 and/or from the power absorbed by the electric motor of the movement means 6, whereby an electric parameter meter of the electric motor of the movement means 6 would be used as a virtual sensor of the speed of the mobile device 2.

The lawnmower tractor 2 preferably has a width comprised between 650 mm and 2500 mm, in particular between 800 mm and 2000 mm. The lawnmower tractor 2 can reach dimensions in length from 1200 mm to 3000 mm, in particular between 1500 mm and 2000 mm. Alternatively, the mobile device 2 can reach lengths up to 5000 mm (in such a case, the motor is preferably an internal combustion engine).

In an optional embodiment not shown in the accompanying figures but in accordance with the present invention, the mobile device 2 can be a self-driving robot lawnmower. The robot lawnmower 2 comprises the driving movement means 6 and is further configured to move and drive autonomously within the working area 1 by means of the use of one or more sensors, so as to orientate itself and avoid obstacles within the working area, as per the prior art. For example, the self-driving robot lawnmower 2 can comprise one or more proximity sensors and/or one or more position sensors configured to send signals to a controller configured to control the driving movement means 6 to guide the mobile device 2 within the working area 1 to carry out the maintenance activities. The self-driving mobile device 2 can have a length comprised between 500 mm and 1500 mm a width comprised between 300 mm and 1250 mm.

The robot lawnmower 2 can comprise one or more electric motors operatively connected to the driving movement means to determine the movement of the robot. The robot lawnmower 2 can comprise a rechargeable on-board battery having a charging capacity comprised between 2.5 Wh and 40 Wh and configured to electrically power the driving movement means. The battery can be configured to deliver a voltage preferably comprised between 24 Volts and 48 Volts. In more detail, the battery can be configured to deliver a current, during a standard operating condition, comprised between 2 Amperes and 5 Amperes for self-driving robots. The battery can be a rechargeable battery via a power outlet of a home network, for example a 110V, 200V, 230V, 380V or 400V power source.

The mobile device 2, in accordance with each of the above-described embodiments, i.e., in accordance with the tractor with driving station 5 and in accordance with the robot lawnmower, comprises at least one tool 4, for example a work tool configured to execute maintenance operations in the working area 1. In particular, the tool 4 can comprise a cutting element movable by rotation around a rotation axis A, whereby the tool 4 is adapted to allow, for example, mowing the turfgrass. The tool 4 can comprise a single rotating blade, or a plurality of rotating blades. Alternatively, the tool 4 can comprise a soil tillage or soil aeration tool.

The mobile device 2 of the present invention comprises a support frame carrying the movement means 6 and one or more tools 4, for example one or two cutting blades, configured to execute maintenance operations within the working area 1.

In detail, the movement means 6 can comprise wheels, in particular two, three or four wheels, or tracks. The wheels can be arranged at respective four vertices of a support frame 3 of the mobile device 2, defining a rectangular or square polygonal shape.

The mobile device 2 extends in length between the front portion and the rear portion, defining a first axis X, which is therefore the longitudinal axis of the mobile device 2. In particular, the longitudinal axis X of the mobile device 2 crosses the front portion and the rear portion in a substantially orthogonal manner. In greater detail, the longitudinal axis X of the mobile device 2 can define an axis of symmetry between the left side and the right side of the mobile device 2 and pass through a central portion of the mobile device 2 itself. Similarly, a straight advancement of the mobile device 2 can be coincident with the longitudinal axis X of the mobile device 2. The longitudinal axis X can be substantially orthogonal to the front wheel axle and/or rear wheel axle of the mobile device 2. The longitudinal axis X can be equidistant from the left and right wheels of the same axis (in such a case the longitudinal axis X defines a central longitudinal axis of the mobile device 2). In particular, the longitudinal axis X, in the present description, is considered placed centrally in the mobile device 2.

The movement means 6 define a support plane SP for the mobile device 2: in fact, such a support plane SP is coincident with the plane of the land on which the mobile device is placed during an operating condition thereof. In more detail, the support plane SP is passing through the contact points between the wheels of the mobile device 2 and the land 1 on which the mobile device 2 is placed. The movement means 6 can define a straight advancement of the mobile device 2 along a longitudinal advancement direction which is substantially coincident with the longitudinal axis X of the mobile device 2: in particular, the longitudinal advancement direction is substantially orthogonal to a rotation axis of the wheels of the mobile device 2. Such a longitudinal advancement direction is substantially parallel to the support plane SP.

If the mobile device 2 is a lawnmower and comprises a rotating blade 4a, such a rotating blade is movable around a rotation axis A which is transverse or substantially orthogonal to the support plane SP. In particular, such a rotation axis A can be transverse, optionally orthogonal, to the longitudinal axis X. In particular, such a rotation axis A can intersect the longitudinal axis X. Such a rotation axis A can be substantially orthogonal to the land 1.

Furthermore, the mobile device 2 extends in width along a second axis Y, which is therefore the transverse axis of the mobile device. The transverse axis Y therefore extends between a left side, interposed in connection between the front portion and the rear portion of the mobile device 2, and a right side, also interposed in connection between the front portion and the rear portion of the mobile device 2, the right side being opposite and spaced with respect to the left side. The axle of the front wheels and/or rear wheels is parallel to the transverse axis Y and optionally substantially parallel to the support plane SP. The transverse axis Y and the longitudinal axis X together define a plane substantially parallel to the land 1 when the mobile device is supported on the ground.

The transverse axis Y and the longitudinal axis X are substantially orthogonal to each other and define in combination the support plane SP or a plane coinciding with the plane substantially parallel to the support plane SP.

The mobile device 2 also extends in height along a further axis Z orthogonal to the longitudinal axis X, the transverse axis Y and to the support plane SP. In other words, the further axis Z is orthogonal, when the mobile device 2 is supported on the land on its own movement means 6, to the land itself. In the particular case in which the mobile device 2 lies on a flat ground, the further axis Z is a vertical axis, i.e., an axis with a direction parallel to the acceleration of gravity g. In the particular case in which the mobile device 2 lies on an inclined ground, the further axis Z is an axis defining, with respect to the vertical axis, a more or less wide angle depending on the extent of the tilt. Thus, the longitudinal axis X, the transverse axis Y and the further axis Z define a reference system of the mobile device 2. The origin of the reference system can be the mass or geometric centre of gravity of the mobile device 2.

It should be noted that the reference system X, Y, Z is a reference system integral with the mobile device 2, such that, when the mobile device 2 is on a flat ground, the vertical axis Z is parallel to the earth acceleration direction G, while, when the mobile device 2 is on an inclined ground, the vertical axis Z is inclined with respect to the earth acceleration direction G.

In accordance with such a reference system, the rotation axis A of the rotating blade is substantially parallel or coincident with the further axis Z of the mobile device 2.

The mobile device 2 comprises a shell 3, made of one among a plastic, composite, and metal material or a combination thereof, and carrying the electric motor 10 of the tool. The shell 3 can further define, in part or in full, the frame of the mobile device. The shell 3 can further carry the movement means 6, for example the wheels of the robot lawnmower, or of the pushed lawnmower. The shell 3 can further carry the on-board battery and optionally the on-board controller.

The mobile device 2 can comprise a cutting deck 20 which is movable in height substantially along the further axis Z of the mobile device 2, between a raised position and a lowered position with respect to the support plane SP. In particular, during an operating condition, the operating unit can be movable in height along the further axis Z between a raised position and a lowered position with respect to the ground, to allow a variation in the cutting height of the turfgrass. A variation along the further axis Z of the cutting deck causes a simultaneous variation in height of the tool 4, and consequently a variation in the distance between the tool 4 and the ground and/or the support plane SP. A handle 32 can be arranged to allow the operator to adjust the cutting deck in height.

The mobile device 2 can comprise a collection bag connected or configured to be connected to an outlet section of the cutting deck 20 so as to collect the cut grass.

The cutting deck 20 can be defined as "*single*", i.e., in which the cutting deck comprises a single cap housing one and only one tool 4. Alternatively, the cutting deck 20 can be "*double*", i.e., in which the cutting deck comprises two caps side by side, in which each cap houses a respective tool 4, so that, in such an embodiment, the cutting deck 20 carries two tools 4, for example two rotating blades side by side. It should be noted that such an embodiment comprising two tools is advantageously associated with the lawnmower tractor. The rotation axes of each tool 4 are side-by-side and staggered with each other in width so as to increase the dimension in width of the cutting deck. This allows the cutting extension to be increased in width during a condition of use of the mobile device. Having described in detail a double cutting deck 20, it is intended to point out how, according to the present invention, the cutting deck can more generally be "*multiple*", i.e., it can accommodate tools 4 for cutting grass in a number equal to two or three or four or five or six or seven or eight or nine or ten or in a number greater than ten, said tools being rotatable with respect to respective rotation axes substantially parallel to each other. In the case of a double or multiple cutting deck, the tools can be synchronised with each other, so as to avoid possible collisions during operation. If the tools are instead not synchronised with each other, at least two of the tools are staggered along the longitudinal axis X of the mobile device 2, i.e., along the advancement direction of the mobile device 2.

The cutting deck 20 carries a drive motor 15 connected to the tool 4 and configured to cause the rotation thereof around the rotation axis A. The drive motor 15 can be supported and constrained above the cap, such that the cap is interposed, along the further axis Z, between the land 1 and the drive motor 15. The drive motor can thus weigh directly on the cutting deck 20. In particular, the cutting deck 20 and the drive motor 15 can be integral with each other, such that a movement in height of the cutting deck 20 can correspond to a respective, in particular equal, movement in height of the drive motor 15.

The drive motor can be connected directly, or by means of a transmission system, to the tool 4. The drive motor comprises a rotation shaft rotatable around a substantially vertical working axis B, in particular parallel or coincident with the further axis Z of the mobile device 2. In particular, the working axis B of the drive motor can be parallel or coincident with the rotation axis A of the tool 4. The rotation of the rotation shaft of the drive motor causes the simultaneous rotation of the tool 4.

The drive motor 15 can comprise an electric motor, for example of the brushless type, or a combustion engine, for example an Otto or Diesel cycle motor. The electric drive motor 15 can be powered by means of a home network through an electric cable, or the device can carry a rechargeable battery connected in power supply to the drive motor 15.

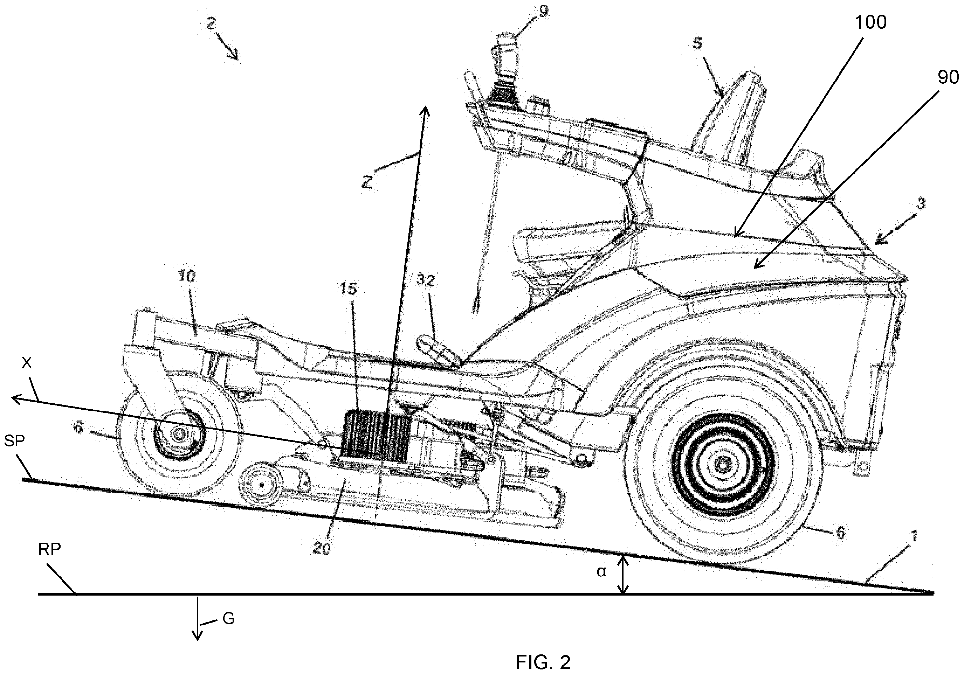

The mobile device comprises a balance detector 90 configured to generate a signal representative of a tilt of the mobile device 2 with respect to a reference plane RP substantially orthogonal to the vertical direction G defined by the acceleration of gravity; the reference plane RP and the vertical direction defined by the acceleration of gravity are depicted, together with the mobile device, in figure 1 and figure 2. In fact, when the mobile device 2 is arranged on a perfectly flat ground, as in figure 1, the reference plane RP coincides with or is parallel to the support plane SP defined by the movement means.

The balance detector 90 can comprise an accelerometer, for example a biaxial or triaxial accelerometer. The control unit 100 is thus configured to calculate the tilt of the mobile device 2 based on the acceleration signals detected by the accelerometer. In particular, the accelerometer is a biaxial or triaxial accelerometer and the control unit 100 is configured to calculate the roll tilt β and/or pitch tilt α of the mobile device 2 based on the acceleration signals detected by the accelerometer.

In particular, the control unit (100) can be configured to calculate the pitch tilt α by means of the following formula:

$$\alpha = arctan\left(\frac{a_x}{\sqrt{a_x^2 + a_y^2 + a_z^2}}\right) - \alpha_{offset}$$

where:

- a, is an acceleration along the longitudinal axis (X) of the mobile device (2) detected by the accelerometer;
- $a_y$ is an acceleration along the transverse axis (Y) of the mobile device (2) detected by the accelerometer
- $a_z$ is an acceleration along the further axis (Z) of the mobile device (2) detected by the accelerometer.

Furthermore, the control unit (100) can be configured to calculate the roll tilt β by means of the following formula:

$$\beta = arctan\left(\frac{-a_y}{a_z}\right) - \beta_{offset}$$

where:

- $a_y$ is an acceleration along the transverse axis (Y) of the mobile device (2) detected by the accelerometer;
- $a_z$ is an acceleration along the further axis (Z) of the mobile device (2) detected by the accelerometer.

Alternatively, or in addition to the accelerometer, the balance detector 90 can comprise a gyroscope. The control unit can thus be configured to receive the signals generated by the gyroscope and determine a pitch and/or roll tilt of the mobile device based on such signals from the gyroscope.

In a preferred embodiment, the balance detector 90 comprises both the accelerometer and the gyroscope, and in which the accelerometer is preferably a triaxial accelerometer. Such a combination allows to detect the roll tilt and/or pitch tilt with high accuracy.

In an embodiment of the present invention, for the determination of the various angles representative of the tilt of the mobile device, the use can be envisaged (instead of calculation by mathematical formulae) of look-up tables by means of which the values of the angles are directly obtained from the readings of the signals of the accelerometer and/or the gyroscope.

**SAFETY PROCEDURE 200**

As previously anticipated in the description, the present invention is aimed at preventing overturning of the mobile device 2 when engaged on inclined ground, for example uphill or downhill.

In fact, the mobile device 2 can be at risk of overturning when its roll or pitch tilt exceeds a predetermined threshold value (which can also depend on the friction features of the land travelled by the mobile device 2). Additionally, the mobile device 2 can be at risk of overturning when between the axis orthogonal to the ground it defines an excessive angle with the vertical axis (defined by the direction of the acceleration of gravity), as well as when the angular velocity of the mobile device 2 around the vertical axis assumes values exceeding safety values.

The present safety procedure 200 is therefore adapted to implement one or more manoeuvres to reduce the risk of the mobile device overturning and help the operator to conduct the mobile device in greater safety.

It should be noted that the safety procedure comprises steps preferably executed by the control unit 100 of the mobile device. For example, the safety procedure can be executed by the same control unit 100 previously described and responsible for controlling the movement means and receiving the tilt signals from the balance detector 90.

The safety procedure 200 comprises a step 201 aimed at receiving the signal representative of the tilt of the mobile device from the balance detector 90. In particular, the control unit 100 can be connected to the balance detector 90 by means of an electric cable or wirelessly.

Furthermore, the safety procedure 200 comprises a step 202 aimed at determining a tilt value of the mobile device 2 with respect to the reference plane RP. The tilt value of the mobile device 2 is an angular tilt value expressed, for example, in degrees.

The tilt value of the mobile device 2 can comprise at least one among a pitch tilt of the mobile device around the transverse axis Y, and a roll tilt of the mobile device around the longitudinal axis X. In particular, the pitch tilt defines an angle $\alpha$ between the longitudinal axis X and the reference plane RP. It should be noted that, for example, a variation in height of the front and/or rear wheel axle can determine the variation of the pitch angle $\alpha$ around the transverse axis Y.

In contrast, the roll tilt defines an angle $\beta$ between the transverse axis Y and the reference plane RP. A variation in height between the left side and the right side of the mobile device can thus determine the variation of the roll angle $\beta$ around the longitudinal axis X.

It should be noted that the balance detector 90, for example when it comprises a biaxial or triaxial accelerometer, is configured to detect both the pitch tilt and the roll tilt. For example, the safety procedure 200 can envisage calculating the pitch tilt and the roll tilt substantially simultaneously.

In an embodiment in accordance with the above description, the value of the tilt of the mobile device 2 calculated by the control unit 100 can comprise a resulting tilt defining a vertical angle $\delta$ between the direction of the acceleration of gravity g and the further axis Z of the mobile device 2. The vertical angle $\delta$ can be defined as a function of the combination between the roll tilt $\beta$ and the pitch tilt $\alpha$ of the mobile device 2. Alternatively, the control unit 100 can be configured to calculate the resulting tilt, defining the vertical angle $\delta$, as a combination of the accelerations detected by the balance detector 90, for example as a function of a combination between an acceleration value detected by the accelerometer along the direction of the longitudinal axis X, an acceleration value detected by the accelerometer along the direction of the transverse axis Y, and an acceleration value detected by the accelerometer along the direction of the further axis Z of the mobile device 2.

The vertical angle $\delta$ can be calculated according to the following formula:

$$\delta = arcos \frac{a_z}{\sqrt{a_x^2 + a_y^2 + a_z^2}}$$

where:

- $a_x$ is the acceleration value detected by the accelerometer along the direction of the longitudinal axis X;
- $a_y$ is the acceleration value detected by the accelerometer along the direction of the transverse axis Y;

- $a_z$ is the acceleration value detected by the accelerometer along the direction of the further axis Z of the mobile device 2.

In an embodiment of the present invention, the acceleration values $a_x$, $a_y$, $a_z$ are the modules of the results of the acceleration vectors respectively along the longitudinal axis X, the transverse axis Y and the further axis Z, suitably rotated according to a rotation matrix to eliminate the influence of the offsets. Such an embodiment has the advantage whereby the measurement of the vertical angle $\delta$ does not require the subtraction of an offset.

The resulting tilt allows not only the pitch and roll tilt values to be taken into account, but also their combination, i.e., it allows to detect conditions in which the mobile device simultaneously has a pitch tilt value other than zero and a roll tilt value other than zero.

The safety procedure 200 further comprises a step 203 of comparing the tilt value with at least one respective threshold tilt value.

For example, step 203 can include comparing the pitch tilt value of the mobile device with at least one respective threshold pitch tilt value. Similarly, step 203 can include comparing the roll tilt value of the mobile device with at least one respective threshold roll tilt value. Preferably, step 203 includes comparing both the pitch tilt value of the mobile device with at least one respective threshold pitch tilt value, and comparing the roll tilt value of the mobile device with at least one respective threshold roll tilt value.

The threshold tilt value of the mobile device 2 can be a preset value or received in input from the control unit 100. For example, the threshold tilt value of the mobile device can be stored in the control unit or can be input by means of a graphic interface unit.

Alternatively, the threshold tilt value can be a value calculated by the control unit 100, for example calculated during the safety procedure 200. In an embodiment, the threshold tilt value can be calculated by the control unit 200 as a function of the weight of the mobile device itself. For example the mobile device can comprise a weight detector configured to generate a signal representative of the weight of the mobile device: the control unit can thus be configured to detect such a weight signal and calculate the threshold tilt value of the mobile device as a function of the weight value of the mobile device. The weight detector can be a device operatively connected to the wheels of the mobile device or to a wheel axle of the mobile device: as a function of the lowering of the mobile device, the control unit can be configured to compute the weight of the mobile device or a datum representative of the weight of the mobile device.

The threshold pitch tilt value can also be a preset value or received in input from the control unit. Similarly as above, the threshold pitch tilt value can be a value calculated by the control unit, for example calculated during the safety procedure. For example, the threshold pitch tilt value can be calculated as a function of one or more balance parameters of the mobile device, for example as a function of a variable load determined by the collection bag of the mobile device. The variable load can be determined by the gradually increasing presence of grass cut and collected during land maintenance operations. In this regard, the mobile device 2 can comprise a load detector or a detector of the amount of grass present in the collection bag: as a function of such information, the control unit 100 can thus be configured to determine the pitch tilt threshold values of the mobile device.

The threshold roll tilt value can also be a preset value or received in input from the control unit. Similarly as above, the threshold roll tilt value can be a value calculated by the control unit, for example calculated during the safety procedure. For example, the threshold roll tilt value can be calculated as a function of one or more balance parameters of the mobile device, for example as a function of a variable load determined by the collection bag of the mobile device. The variable load can be determined by the gradually increasing presence of grass cut and collected during land maintenance operations. In this regard, the mobile device 2 can comprise a load detector or a detector of the amount of grass present in the collection bag: as a function of such information, the control unit 100 can thus be configured to determine the roll tilt threshold values of the mobile device.

In an embodiment, the safety procedure can compare the resulting tilt of the mobile device, i.e., the tilt defined as a combination of the roll tilt and the pitch tilt, with a respective resulting threshold tilt. In other words, when the mobile device 2 is subject to both roll and pitch, the safety procedure can define the resulting threshold tilt which takes into account the risk due to the combination of roll and pitch on the mobile device.

The safety procedure can further comprise a step 204 of varying at least one control parameter of the movement means 6 as a function of the comparison between the tilt value and the respective threshold tilt value. For example, as a function of such a comparison, the control unit 100 can control the movement means, for example the electric or thermal motor of the mobile device, to change the power delivery and/or to limit a maximum speed of the mobile device 2.

The control parameter of the movement means 6 can comprise at least one among a maximum speed imposed on the mobile device, a maximum acceleration imposed on the mobile device, a maximum acceleration variation imposed on the mobile device, a maximum direction variation imposed on the mobile device 2.

In an embodiment, the control parameter comprises limiting a maximum speed of the mobile device, optionally both in advancement and in reverse.

In a further embodiment, the control parameter comprises limiting a maximum speed of the mobile device, for example in advancement and in reverse, and limiting a maximum acceleration variation imposed on the mobile device. For example, if the mobile device is in a particularly inclined condition, the control unit can limit not only the maximum speed of the mobile device 2, but also the maximum acceleration thereof, optionally both in advancement and in reverse, reducing the load displacements and consequently reducing the overturning risk of the mobile device.

In a further embodiment, step 204 includes limiting the maximum speed of the mobile device, and also limiting a maximum direction variation imposed on the mobile device. For example, if the roll tilt is greater than a certain threshold, the safety procedure 200 can include limiting the maximum steering angle imposed on the mobile device. Such an aspect is particularly relevant if the mobile device 2 is provided with an electronic steering system, otherwise called "Drive by Wire" by the person skilled in the art, in which the mobile device is steered by means of electrical command directed to one or more motors or actuators. By limiting the maximum direction variation of the mobile device, the safety procedure 200 allows to limit the load displacements between the left and right side, and vice versa, of the mobile device, thereby reducing the roll overturning risk. For example, if the roll tilt value is positive, the safety procedure can comprise a step of limiting the maximum rightward steering: conversely, if the roll tilt value is negative, the safety procedure can comprise a step of limiting the maximum leftward steering.

It should be noted that the safety procedure is aimed at limiting the maximum speed and/or maximum acceleration of the mobile device and/or the maximum direction variation of the mobile device as the tilt value of the mobile device increases, for example as the pitch and/or roll tilt value of the mobile device 2 increases.

In an embodiment, the control unit can be configured to control the movement means to determine the movement of the mobile device 2 selectively in:

- a fast mode, in which the movement means are allowed to move the mobile device up to a maximum speed, and
- a slow mode in which the movement means are allowed to move the mobile device up to a reduced speed which is lower than the maximum speed of the fast mode.

In particular, the reduced speed can be comprised between 20% and 80% of the maximum speed of the mobile device: optionally the reduced speed can be comprised between 30% and 60% of the maximum speed of the mobile device. In particular, the reduced speed is comprised between 2 km/h and 6 km/h, in particular between 3 km/h and 5 km/h.

The maximum speed of the fast mode, and optionally the maximum speed achievable by the mobile device, comprises a maximum speed achievable in advancement comprised between 10 km/h and 25 km/h, in particular between 10 km/h and 15 km/h, in particular substantially equal to 12 km/h, and/or a maximum speed achievable in reverse comprised between 2 km/h and 5 km/h, in particular between 3 km/h and 4 km/h, in particular substantially equal to 3 km/h.

The step 204 of varying the control parameter can therefore comprise, during the safety procedure 200:

- if the tilt value detected by the balance detector 90 exceeds the respective threshold tilt value, inhibiting fast mode and allowing slow mode;
- if the tilt value detected by the balance detector 90 is within the respective threshold tilt value, allowing both slow mode and fast mode.

Optionally, the safety procedure 200 can comprise varying the control parameter as a function of both pitch tilt and roll tilt. In particular, during the safety procedure, step 204 can comprise inhibiting fast mode and allowing slow mode if the pitch tilt of the mobile device 2 is greater than the threshold pitch tilt.

Furthermore, during the safety procedure, step 204 can comprise varying the control parameter of the movement means comprises allowing both the slow mode and the fast mode, if the pitch tilt of the mobile device 2 is greater than the threshold pitch tilt.

Similarly, the safety procedure can comprise inhibiting fast mode and allowing slow mode if the roll tilt of the mobile device 2 is greater than a threshold roll tilt. Furthermore, the safety procedure can comprise allowing both fast mode and slow mode, if the roll tilt of the mobile device 2 is less than the threshold roll tilt.

In a further embodiment, the control unit can be configured to control the movement means to determine the movement of the mobile device 2 in a standard mode, distinct from fast mode and slow mode. In such a case, the reduced speed includes speeds between 20% and 50% of the maximum speed of the mobile device 2, optionally between 25% and 35% of the maximum speed of the mobile device 2, in particular substantially equal to 30% of the maximum speed of the mobile device 2.

In the standard mode, the movement means can be allowed to move the mobile device 2 up to a nominal, intermediate speed between the maximum speed of fast mode and the reduced speed of slow mode. The nominal speed can include speeds between 50% and 80% of the maximum speed of the mobile device 2, optionally between 55% and 65% of the maximum speed of the mobile device 2, in particular substantially equal to 60% of the maximum speed of the mobile device 2.

The threshold tilt value can comprise:

- a first threshold tilt value, and
- a second distinct threshold tilt value greater than the first threshold tilt value.

The first threshold tilt value can include tilts of the mobile device 2 comprised between 0° and 6°, in particular between 0° and 5°, while the second threshold tilt value can comprise tilts of the mobile device 2 comprised between 5° and 12°, in particular between 5° and 10°.

Furthermore, the threshold pitch tilt can comprise:

- a first threshold pitch tilt value, and
- a second distinct threshold pitch tilt value greater than the second threshold pitch tilt value.

Similarly, the threshold roll tilt can comprise:

- a first threshold roll tilt value, and
- a second distinct threshold roll tilt value larger than the first threshold roll tilt value.

During the safety procedure, the step 204 of varying at least one control parameter of the movement means can thus comprise the following steps:

- if the tilt value detected by the balance detector 90 is:

  ○ greater than the second threshold tilt value, inhibiting fast mode and standard mode and allowing slow mode;
  ○ greater than the first threshold tilt value and less than the second threshold tilt value, inhibiting fast mode and allowing both slow mode and standard mode;
  ○ less than the first threshold tilt value, allowing fast mode, standard mode and slow mode.

Alternatively, during the safety procedure, the step 204 of varying the control parameter of the movement means can comprise the following steps:

- if the pitch tilt of the mobile device 2 is:

  ○ greater than the second threshold pitch tilt value, inhibiting fast mode and standard mode and allowing slow mode;
  ○ greater than the first threshold pitch tilt value and less than the second threshold pitch tilt value, inhibiting fast mode and allowing both slow mode and standard mode;
  ○ less than the first threshold pitch tilt value, allowing fast mode, standard mode and slow,

Alternatively or in addition to the above, during the safety procedure, the step 204 of varying the control parameter of the movement means can comprise the following steps:

- if the roll tilt of the mobile device 2 is:

  ○ greater than the second threshold roll tilt value, inhibiting fast mode and standard mode and allowing slow mode;

∘ greater than the first threshold roll tilt value and less than the second threshold roll tilt value, inhibiting fast mode and allowing both slow mode and standard mode;

∘ less than the first threshold roll tilt value, allowing fast mode, standard mode and slow,

The safety procedure 200 can further comprise limiting the maximum speed of the mobile device 2 as a function of a variation over time of tilt of the mobile device. In other words, the variation over time of the tilt of the mobile device defines a speed with which the mobile device is tilting, for example around the longitudinal axis X and/or around the transverse axis Y. In particular, the safety procedure can further comprise limiting the maximum speed of the mobile device 2 as a function of a variation over time of the roll tilt and/or a variation over time of the pitch tilt of the mobile device 2.

The variation over time can be an infinitesimal variation over time, for example less than 0.5s, in particular less than 0.1s, to define a time derivative of the tilt with respect to time.

The safety procedure can therefore comprise reducing the maximum speed of the mobile device 2 with increasing variation over time of the roll tilt and/or variation over time of the pitch tilt: the greater the speed with which the mobile device is tilting, and the greater the reduction of the maximum speed commanded by the safety procedure.

It should be noted that the steps of varying the control parameter of the mobile device described above can be executed as a function of discrete tilt values. Similarly, the tilt values can correspond to a preset number of speed ranges, for example corresponding to three speeds, i.e., the reduced speed, the nominal speed, and the maximum speed.

However, the ratio of the maximum speed limited by the safety procedure to the detected tilt value of the mobile device can be represented by a continuous function, for example a mathematical function. The mobile device can further comprise a warning system configured to emit a warning signal when the mobile device is in a risk condition, for example when the detected tilt value of the mobile device exceeds the respective threshold tilt value. The safety procedure 200 can thus comprise the step of activating the warning system when the detected tilt value of the mobile device exceeds the respective threshold tilt value. The warning system can comprise at least one among a sound emitter configured to emit a sound signal, and a light emitter, for example arranged on a control panel of the mobile device 2, configured to emit a light signal. The warning system allows to warn the driver of the mobile device 2 that the mobile device is in a condition of excessive tilting, for example excessive roll and/or pitch tilt.

**VALIDATION PROCEDURE 300**

The present description also relates to a validation procedure 300 adapted to verify a reliability of the tilt values detected by the balance detector 90 and to subject the execution of the safety procedure 200 to the outcome of the validation procedure. The validation procedure 300 can be executed by the control unit 100 of the mobile device 2, in particular by the same control unit executing the safety procedure 200.

It should be noted that in the embodiment in which the balance detector 90 comprises an accelerometer, the control unit is configured to calculate the tilt of the mobile device based on the accelerations detected by said accelerometer, in particular by the biaxial or triaxial accelerometer, and optionally combining said accelerometric information with the signals deriving from the gyroscope. However, such accelerations measured by the balance detector 90 are influenced by the accelerations, longitudinal along the longitudinal axis X and transverse along the transverse axis Y, to which the mobile device 2 is subjected while running. For example, an increase in speed of the mobile device controlled by the movement means can cause a respective acceleration on the mobile device. Furthermore, an uneven terrain can generate a noisy signal output from the balance detector 90, thus making it difficult to calculate the actual tilt of the mobile device 2.

The validation procedure 300 is thus aimed at obtaining a reliable value of the tilt of the mobile device against interfering inputs, such as in particular accelerations which the mobile device 2 can undergo during its advancement on the ground and angular velocities that the mobile device 2 can have with respect to the axis orthogonal to the ground.

The validation procedure 300 can include validating the data as a function of the acceleration values detected. Alternatively, the validation procedure 300 can include validating the data as a function of the angular velocity of the mobile device 2 around the further axis Z. In an embodiment, the validation procedure 300 can include validating the data as a function of both the detected acceleration values, and as a function of the angular velocity of the mobile device 2 around the further axis Z.

The validation procedure 300 can comprise at least the following steps of:

- detecting an acceleration of the mobile device 2 and/or an angular velocity of the mobile device 2 with respect to an axis orthogonal to the ground and/or a variation over time of the angular velocity of the mobile device 2 with respect to an axis orthogonal to the ground;

- comparing such an acceleration of the mobile device 2 with a threshold acceleration and/or comparing such an angular velocity of the mobile device 2 with respect to the axis orthogonal to the ground with a threshold angular velocity and/or comparing such a variation over time of the angular velocity of the mobile device 2 with respect to the axis orthogonal to the ground with a threshold variation;

- if the acceleration of the mobile device 2 exceeds the threshold acceleration and/or the angular velocity of the mobile device 2 with respect to the axis orthogonal to the ground exceeds the threshold angular velocity and/or the variation over time of the angular velocity of the mobile device 2 with respect to the axis orthogonal to the ground exceeds the threshold variation, discarding the detected acceleration of the mobile device 2,

- if the acceleration of the mobile device 2 does not exceed the threshold acceleration and/or the angular velocity of the mobile device 2 with respect to the axis orthogonal to the ground does not exceed the threshold angular velocity and/or the variation over time of the angular velocity of the mobile device 2 with respect to the axis orthogonal to the ground does not exceed the threshold variation, calculating the tilt of the mobile device 2 (such a calculation being in particular a function of the acceleration detected).

The threshold acceleration can comprise acceleration values between 1g and 1.5g, especially between 1g and 1.3g, more in particular between 1.1g and 1.3g. In greater detail, the threshold acceleration can be substantially equal to 1g or 1.1g. The threshold angular velocity can comprise angular velocity values between 10 and 30 deg/sec, in particular between 10 and 20 deg/sec. The threshold variation can be set at a value which can be found at a sudden change of direction of the mobile device 2.

In an embodiment, the balance detector 90 is configured to detect a vertical acceleration, in particular substantially parallel to the direction of the acceleration of gravity. The validation procedure 300 can then comprise the steps of:

- if a vertical acceleration detected by the balance detector 90 is comprised between a predefined minimum vertical acceleration threshold and a predefined maximum vertical acceleration threshold, validating the signals detected by the balance detector 90 to determine the tilt of the mobile device;

- if a vertical acceleration detected by the balance detector 90 is less than said minimum vertical acceleration threshold and greater than said maximum vertical acceleration threshold, discarding the respective signals detected by the balance detector 90.

## CALIBRATION PROCEDURE

The balance detector 90 is installed on the mobile device. In particular, the balance detector 90 can be housed on an electronic board, for example on the same electronic board of the control unit.

In an embodiment, the balance detector 90 can be installed on the mobile device on a plane substantially parallel to the support plane SP of the mobile device 2. In such a case, when the mobile device 2 is in a flat position, i.e., when the support plane SP is parallel to the reference plane RP, the balance detector 90 generates a neutral signal. In fact, when the mobile device 2 is stopped with the support plane SP parallel to the reference plane RP, the accelerometer of the balance detector 90 generates substantially nil acceleration signals along the longitudinal axis X and along the transverse axis Y, and at the same time generates an acceleration along the further axis Z which is substantially equal to the acceleration of gravity.

During a use condition, when the mobile device 2 reaches an inclined ground, i.e., when the support plane SP is incident to the reference plane RP, the balance detector 90 of the mobile device 2 generates an acceleration signal along the longitudinal axis X and/or along the transverse axis Y other than zero, as a function of the current tilt of the mobile device 2 and at the same time generates an acceleration along the further axis Z which is different from the acceleration of gravity. It should be noted that the longitudinal axis X, the transverse axis Y and the further axis Z define a reference system integral with the mobile device 2 and, as a result, in particular also with the support plane SP. When the mobile device 2 is on a flat surface, the further axis Z is parallel to the direction of the acceleration of gravity g. In contrast, when the mobile device 2 is placed on an inclined plane, the further axis Z is inclined with respect to the direction of the acceleration of gravity g.

The balance detector 90 can be installed on board the mobile device 2 according to an ideal parallelism with respect to the support plane SP. Alternatively, the balance detector 90 can be installed on board the mobile device 2 in an inclined manner with respect to the support plane SP to define an installation angle φ as shown in the detail view of figure 5a, such that, when the mobile device is in the flat position, i.e., when the reference plane RP is parallel or coincident with the support plane SP, the balance detector 90 generates an acceleration signal, along the longitudinal axis X and/or along the transverse axis Y, other than zero. It should be noted that such an installation angle γ can also be generated by a replacement of the wheels of the mobile device 2, for example with wheels of different diameter. Further, such an installation angle γ can be influenced by the tyre pressure of the mobile device 2: for example, a reduction of the tyre pressure of the rear tyres can cause a pitch tilt of the mobile device 2.

In this regard, the control unit can be configured to execute a calibration procedure of the balance detector 90 adapted to re-establish a starting point from which to calculate the actual tilt of the mobile device. In other words, the calibration procedure is aimed at defining the zero point relative to the accelerations detected by the balance detector 90 when the mobile device is in the flat position. The calibration procedure comprises the steps of:

- detecting the signals generated by the balance detector 90 when the mobile device 2 is in the flat position;
- as a function of said signals, determining a reference tilt value when the mobile device 2 is in the flat position;
- calculating an actual tilt value of the mobile device 2 with respect to the reference plane RP starting from the reference tilt value.

In other words, the reference tilt value defines the zero point from which to define the tilt of the mobile device 2. For example, the reference tilt value can comprise the tilt value, with respect to the support plane SP, of the electronic board on which the balance detector 90 is mounted.

The reference tilt can be variable as a function of a variation in the balance of the mobile device 2. For example, the variation of the balance of the mobile device can comprise at least one among:

- a variation in height of a cutting deck of the mobile device 2;
- a variation in height of a front wheel axle of the mobile device 2 and/or of a rear wheel axle of the mobile device 2;
- a replacement of one or more wheels of the mobile device 2;
- a variation of the diameter of one or more wheels of the mobile device 2.

In an embodiment, the control unit can be configured to execute the calibration procedure as a result of a variation in balance of the mobile device 2. For example, the control unit can be configured to execute the calibration procedure automatically as a result of at least one among:

- a variation in height of a cutting deck of the mobile device 2;
- a variation in height of the front wheel axle of the mobile device 2 and/or of the rear wheel axle of the mobile device 2;
- a replacement of one or more wheels of the mobile device 2;
- a variation of the diameter of one or more wheels of the mobile device 2.

In a simplified embodiment of the present invention, the calibration procedure can be implemented in the form of a check that any deviation between the mounting angle of the balance detector 90 in the mobile device 2 and the nominal mounting angle is less than a predetermined tolerance (for example ± 5°).

The calibration procedure described above can be executed in conjunction with the assembly of the mobile device 2 and/or a maintenance intervention which involves a variation in balance of the mobile device 2. Alternatively, the calibration procedure described above can be executed according to a predetermined periodicity and/or upon request.

In an embodiment of the present invention, the calibration procedure can be executed using a remote infrastructure, whereby the data related to the balance of the mobile device 2 is first transferred to a remote computer, for example a server, and then to a remote device, for example a smartphone. In such a case, it can be envisaged that an application for the management and/or maintenance of the mobile device 2 is installed in the remote device, such an application being able to provide at least one selector for the start of the calibration procedure and at least one indicator of the outcome of the calibration procedure.

EFFECTS OF THE INVENTION

From the above detailed description, it is unequivocally clear that the present invention fully achieves the objectives underlying it.

Above all, the mobile device according to the invention, in particular a lawnmower tractor, differs from the technical solutions described in the aforementioned prior art documents for an improved management of travel on steep stretches of land and consequently for a reduction of the criticalities associated with such travel, whereby the manual operation of said mobile device is safer, with a containment of the overturning risks.

The advantageous effects of the invention are to be understood as being achieved by the subject-matter of the following claims, as well as by any possible variation obviously deriving from the subject-matter of the following claims.

**Claims**

1. Mobile device (2) for the maintenance of land (1), in particular a manually-driven lawnmower tractor, comprising:

   - a balance detector (90) configured to generate a signal representative of a tilt of the mobile device (2) with respect to a reference plane (RP) substantially orthogonal to the vertical direction (G) defined by the acceleration of gravity and
   - a control unit operatively connected to the balance detector (90) and configured to execute a safety procedure,

   wherein said safety procedure comprises at least the following steps:

   - receiving from said balance detector (90) said signal representative of the tilt of the mobile device (2);
- determining a current tilt value of the mobile device (2) with respect to the reference plane (RP) based on said signal representative of a tilt of the mobile device (2); and
- comparing said tilt value of the mobile device (2) with at least one threshold tilt value.

2. Mobile device (2) according to the preceding claim, wherein said mobile device (2) extends along a first axis (X), along a second axis (Y) and along a third axis (Z), said first axis (X), second axis (Y) and third axis (Z) being in particular substantially orthogonal to each other, said first axis (X) being in particular a longitudinal axis of said mobile device (2) and said second axis (Y) being in particular a transverse axis of said mobile device (2),

wherein said balance detector (90) is in particular configured to determine a pitch tilt of the mobile device (2) around said second axis (Y) and/or a roll tilt of the mobile device (2) around said first axis (X), the value of the pitch tilt of the mobile device (2) being able to contemplate a calculation, by said control unit, of a resulting tilt defined by a combination between the roll tilt and the pitch tilt of the mobile device (2), in particular wherein the balance detector (90) is configured to detect at least one acceleration of the mobile device (2), in particular at least one acceleration among a longitudinal acceleration along said first axis (X) and/or a transverse acceleration along said second axis (Y) and/or a vertical acceleration along said third axis (Z), said control unit being in particular configured to calculate the tilt value of the mobile device (2) at least based on said acceleration of the mobile device (2), in particular to calculate the roll tilt and pitch tilt value of the mobile device at least based on said longitudinal acceleration and based on said transverse acceleration and optionally based on said vertical acceleration.

3. Mobile device (2) according to any one of the preceding claims, wherein said balance detector (90) comprises at least one among an accelerometer, in particular a biaxial or triaxial accelerometer, and a gyroscope, said accelerometer and said gyroscope being optionally integrated in a digital electronic device, said balance detector (90) being alternatively able to comprise at least one among an optical sensor, a vision system, a satellite signal receiver such as a satellite geolocator in particular according to GPS technology, a speed transducer, an on-board position transducer and an electrical parameter meter, such as absorbed current and/or power supply voltage and/or absorbed power, associated with the mobile device (2),

optionally wherein said balance detector (90) is constrained, directly or indirectly, to a frame of said mobile device (2), said balance detector (90) being optionally housed in a compartment preferably arranged below a driving station (5) and/or a seat of said mobile device (2) and/or optionally wherein said mobile device (2) further comprises at least one warning system configured to emit a warning signal and said safety procedure further comprises the step of activating said warning system when said current tilt value of the mobile device (2) exceeds said at least one threshold tilt value,
in particular wherein said warning system comprises at least one among:

- a sound emitter configured to emit a sound signal;
- a light emitter, for example arranged on a control panel of the mobile device (2), configured to emit a light, and/or

optionally wherein said mobile device (2) further comprises:

- at least one electric motor for activating said movement means and/or one or more tools of said cutting deck;
- at least one power supply battery of said electric motor, said battery being of the rechargeable type and advantageously also of the removable type,

drive-by-wire technology can also be implemented in said mobile device (2).

4. Mobile device (2) according to any one of the preceding claims, said mobile device (2) further comprising movement means for determining the movement of the mobile device (2) on a land, said control unit being further operatively connected to the movement means,

wherein said safety procedure further comprises the step of varying at least one control parameter of the movement means as a function of the comparison between said current tilt value of said mobile device (2) and said at least one threshold tilt value,
in particular wherein said control parameter of the movement means comprises at least one among:

- a maximum speed imposed on the mobile device (2);
- a maximum acceleration imposed on the mobile device (2);
- a maximum acceleration variation imposed on the mobile device (2);
- a maximum direction variation imposed on the mobile device (2),

optionally wherein the control unit is configured to adjust the movement means to vary a maximum speed of the mobile device (2) and/or a maximum acceleration of the mobile device (2), optionally wherein, in said safety procedure, said step of varying at least one control parameter of the movement means comprises:

- limiting and/or reducing the maximum speed and/or maximum acceleration of the mobile device (2), in advancement and/or in reverse, as a function of the pitch tilt and/or roll tilt detected, in particular contextually, by the balance detector (90), and/or
- limiting and/or reducing the maximum speed and/or the maximum acceleration of the mobile device (2), in advancement and/or in reverse, with the increase of at least one among the pitch tilt and the roll tilt of the mobile device (2).

5. Mobile device (2) according to any one of the preceding claims, wherein the control unit is configured to control the movement means to determine the movement of the mobile device (2) selectively in:

- a fast mode, in which the movement means are allowed to move the mobile device (2) up to a maximum speed, and
- at least one slow mode in which the movement means are allowed to move the mobile device (2) up to a reduced speed, said reduced speed being comprised between 20% and 80% of said maximum speed of the mobile device (2), optionally between 30% and 60%, in particular said reduced speed being comprised between 2 km/h and 6 km/h, more in particular between 3 km/h and 5 km/h, and

wherein, in said safety procedure, said step of varying at least one control parameter of the movement means comprises:

- if said current tilt value of the mobile device (2) exceeds said threshold tilt value, inhibiting fast mode and allowing slow mode;
- if said current tilt value of the mobile device (2) does not exceed said threshold tilt value, allowing both slow mode and fast mode,

preferably wherein the maximum speed of the mobile device (2) comprises:

- a maximum advancement speed comprised between 10 km/h and 25 km/h, in particular between 10 km/h and 15 km/h, in particular substantially equal to 12 km/h, and
- a maximum reverse speed comprised between 2 km/h and 5 km/h, in particular between 3 km/h and 4 km/h, more in particular substantially equal to 3 km/h.

optionally wherein, in said safety procedure, said step of varying at least one control parameter of the movement means comprises:

- if the pitch tilt of the mobile device (2) is:

  ◦ greater than a threshold pitch tilt, inhibiting fast mode and allowing slow mode;
  ◦ less than said threshold pitch tilt, allowing both slow mode and fast mode; and/or

- if the roll tilt of the mobile device (2) is:

  ◦ greater than a threshold roll tilt, inhibiting fast mode and allowing slow mode;
  ◦ less than said threshold roll tilt, allowing both fast mode and slow mode.

6. Mobile device (2) according to the preceding claim, wherein the reduced speed includes speeds between 20% and 50% of said maximum speed of the mobile device (2), optionally between 25% and 35%, in particular substantially equal to 30% of said maximum speed of the mobile device (2),

wherein the control unit is configured to control the movement means to determine the movement of the mobile device (2) in a standard mode, distinct from said fast mode and said slow mode, wherein, in said standard mode, the movement means are allowed to move the mobile device up to a nominal speed, said nominal speed including speeds between 50% and 80% of said maximum speed of the mobile device (2), optionally between 55% and 65%, in particular substantially equal to 60% of said maximum speed of the mobile device (2), wherein said at least one threshold tilt value comprises:

- a first threshold tilt value and
- a second threshold tilt value greater than the first threshold tilt value; and

wherein, in said safety procedure, said step of varying at least one control parameter of the movement means comprises:

- if the current tilt value of the mobile device (2) is greater than the second threshold tilt value, inhibiting fast mode and standard mode and allowing slow mode;

- if the current tilt value of the mobile device (2) is greater than the first threshold tilt value and less than the second threshold tilt value, inhibiting fast mode and allowing both slow mode and standard mode;

- if the current tilt value of the mobile device (2) is less than the first threshold tilt value, allowing fast mode, standard mode and slow mode,

preferably wherein the first threshold tilt value includes tilts of the mobile device (2) comprised between 0° and 6°, in particular between 0° and 5°, and wherein the second threshold tilt value includes tilts of the mobile device (2) comprised between 5° and 12°, in particular between 5° and 10°,

optionally wherein the threshold pitch tilt comprises:

- a first threshold pitch tilt value and
- a second threshold pitch tilt value greater than the second threshold pitch tilt value; and optionally wherein in said safety procedure, said step of varying at least one control parameter of the movement means comprises:
- if the pitch tilt value of the mobile device (2) is:

  ∘ greater than the second threshold pitch tilt value, inhibiting fast mode and standard mode and allowing slow mode;

  ∘ greater than the first threshold pitch tilt value and less than the second threshold pitch tilt value, inhibiting fast mode and allowing both slow mode and standard mode;

  ∘ less than the first threshold pitch tilt value, allowing fast mode, standard mode and slow mode, and/or

optionally wherein the threshold roll tilt comprises:

- a first threshold roll tilt value, and
- a second threshold roll tilt value greater than the first threshold roll tilt value; and

optionally wherein in said safety procedure, said step of varying at least one control parameter of the movement means comprises:

- if the roll tilt of the mobile device (2) is:

  ∘ greater than the second threshold roll tilt value, inhibiting fast mode and standard mode and allowing slow mode;

  ∘ greater than the first threshold roll tilt value and less than the second threshold roll tilt value, inhibiting fast mode and allowing both slow mode and standard mode;

  ∘ less than the first threshold roll tilt value, allowing fast mode, standard mode and slow,

7. Mobile device (2) according to any one of the preceding claims, wherein the safety procedure comprises limiting and/or reducing the maximum speed of the mobile device (2) as a function of a variation over time of the roll tilt and/or a variation over time of the pitch tilt of the mobile device (2), in particular said variation over time being a variation in infinitesimal time, for example less than 0.5s, in particular less than 0.1s,

   in particular wherein the safety procedure comprises limiting and/or reducing the maximum speed of the mobile device (2) as the variation over time of the roll tilt increases and/or as the variation over time of the pitch tilt increases, optionally wherein the safety procedure comprises limiting the maximum speed of the mobile device (2), for example by inhibiting fast mode or standard mode, as a function of the roll tilt and/or pitch tilt, according to a continuous function or according to a step function.

8. Mobile device (2) according to any one of the preceding claims, wherein the control unit is configured to execute a validation procedure adapted to verify a reliability of said current tilt value of the mobile device (2) and/or of at least one tilt value detected by the balance detector (90), said validation procedure comprising at least the steps of:

   - detecting a current acceleration of the mobile device (2) and/or an angular velocity of the mobile device (2) with respect to said third axis (Z) and/or a variation over time of the angular velocity of the mobile device (2) with respect to said third axis (Z);

   - comparing said current acceleration of the mobile device (2) with a threshold acceleration and/or said angular velocity of the mobile device (2) with respect to said third axis (Z) with a threshold angular velocity and/or comparing said variation over time of the angular velocity of the mobile device (2) with respect to said third axis (Z) with a threshold variation; and

- subjecting the execution of said safety procedure to the outcome of said validation procedure.

9. Mobile device (2) according to the preceding claim, wherein said validation procedure comprises the further steps of:

- if the current acceleration of the mobile device (2) exceeds said threshold acceleration and/or the angular velocity of the mobile device (2) with respect to said third axis (Z) exceeds said threshold angular velocity and/or the variation over time of the angular velocity of the mobile device (2) with respect to the axis orthogonal to the ground exceeds the threshold variation, discarding said current acceleration,
- if the current acceleration of the mobile device (2) does not exceed said threshold acceleration and/or the angular velocity of the mobile device (2) with respect to said third axis (Z) does not exceed said threshold angular velocity and/or the variation over time of the angular velocity of the mobile device (2) with respect to the axis orthogonal to the ground does not exceed the threshold variation, calculating the tilt of the mobile device (2),

in particular wherein said threshold acceleration comprises acceleration values between 1g and 1.5g, in particular between 1g and 1.3g, more in particular between 1.1g and 1.3g, in greater detail said threshold acceleration being substantially equal to 1g or 1.1g and/or
in particular wherein said threshold angular velocity comprises angular velocity values between 10 and 30 deg/sec, in particular between 10 and 20 deg/sec.

10. Mobile device (2) according to claim 8 or claim 9, wherein the balance detector (90) is configured to detect a vertical acceleration, in particular substantially parallel to the direction of the acceleration of gravity, and wherein the validation procedure further comprises at least one step among:

- if a vertical acceleration detected by the balance detector (90) is comprised between a predefined minimum vertical acceleration threshold and a predefined maximum vertical acceleration threshold, validating the signals detected by the balance detector (90) to determine the tilt of the mobile device (2);
- if a vertical acceleration detected by the balance detector (90) is less than said minimum vertical acceleration threshold and greater than said maximum vertical acceleration threshold, discarding the respective signals detected by the balance detector (90).

11. Mobile device (2) according to any of the preceding claims, wherein said control unit is configured to execute a calibration procedure of the balance detector (90), said calibration procedure comprising the steps of:

- arranging the mobile device (2) so as to lie on a supporting plane (SP) substantially parallel to the reference plane (RP) or ideally having a predefined tilt with respect to the reference plane (PR), and
- determining a reference tilt value of the mobile device (2) based on a signal received from said balance detector, optionally said reference tilt value comprising a mounting tilt of the balance detector (90).

12. Mobile device (2) according to the preceding claim, wherein, in said safety procedure, said step of determining a current tilt value of the mobile device (2) with respect to the reference plane (RP) based on said signal representative of a tilt of the mobile device (2) comprises the step of determining the current tilt value of the mobile device (2) with respect to the reference plane (RP) differentially from said reference tilt value.

13. Mobile device (2) according to the preceding claim, wherein said control unit is configured to take into account, in said calibration procedure, any variation of the balance of the mobile device (2), said reference tilt value being in particular variable as a function of said variation of the balance of the mobile device (2),

optionally wherein said variation in balance of the mobile device (2) comprises:

- a variation in height of a cutting deck of the mobile device (2) and/or
- a variation in height of a front wheel axle of the mobile device (2) and/or
- a variation in height of a rear wheel axle of the mobile device (2) and/or
- a replacement of one or more wheels of the mobile device (2) and/or
- a variation of the diameter of one or more wheels of the mobile device (2) and/or
- an adjustment of the pressure of one or more wheels of the mobile device (2) and/or
- an adjustment of the stiffness of a damping organ and/or of a suspension organ of the mobile device (2),

in particular wherein said control unit is configured to automatically execute the calibration procedure in the event of a variation in balance of the mobile device (2).

14. Mobile device (2) according to any one of the preceding claims, wherein said control unit is configured to define said at least one threshold tilt value, in particular the threshold pitch tilt value and/or the threshold roll tilt value, as a function of a variable balance parameter during an operating condition of the mobile device (2),
optionally wherein said variable balance parameter comprises a weight of that which is contained in a collection bag of the mobile device (2), in particular in a collection bag adapted to allow a temporary accumulation of grass cuttings, and/or wherein said variable balance parameter comprises a vertical load acting on one or more wheels of the mobile device (2), for example a vertical load acting on the front wheel axle and/or on the rear wheel axle.

15. Safety procedure aimed at a mobile device (2) for the maintenance of land (1), namely a manually-driven lawnmower tractor, said mobile device (2) comprising a balance detector (90) configured to generate a signal representative of a tilt of the mobile device (2) with respect to a reference plane (RP) substantially orthogonal to the vertical direction (G) defined by the acceleration of gravity,

   wherein said safety procedure includes executing a safety procedure comprising at least the following steps:

      - receiving from said balance detector (90) said signal representative of the tilt of the mobile device (2),
      - determining a current tilt value of the mobile device (2) with respect to the reference plane (RP) based on said signal representative of a tilt of the mobile device (2); and
      - comparing said tilt value of the mobile device (2) with at least one threshold tilt value,

   in particular wherein said mobile device (2) further comprises movement means for determining the movement of the mobile device (2) on a land and wherein said safety procedure further comprises the step of varying at least one control parameter of the movement means as a function of the comparison between said current tilt value of said mobile device (2) and said at least one threshold tilt value.

FIG. 1

EP 4 298 891 A2

FIG. 2

FIG. 3

FIG. 4

FIG. 5

FIG. 5a

EP 4 298 891 A2

200

201

202

203

204

FIG. 6

300

301

302

303

304

FIG. 7

**REFERENCES CITED IN THE DESCRIPTION**

**Patent documents cited in the description**

- EP 3545749 A1
- US 20210029883 A1
- US 20210022293 A1
- US 7762633 B
- EP 1488296 A1
- GB 2325060 A
- CN 206602838 U
- US 8352116 B2
- US 5204814 A
- JP 58054509 U
- US 20210127568 A1
- US 9459097 B2
- US 6983583 B2